# EUROPEAN PATENT SPECIFICATION

(11) **EP 3 696 639 B1**
(45) Date of publication and mention of the grant of the patent: **05.04.2023**
(21) Application number: 19157242.9
(22) Date of filing: 14.02.2019
(51) Int. Cl.: G05D 1/02

(54) **ROBOTIC VEHICLE FOR MOVABLE OPERATION IN A WORK AREA**
ROBOTISCHES FAHRZEUG FÜR BEWEGLICHEN BETRIEB IN EINEM ARBEITSBEREICH
VÉHICULE ROBOTISÉ POUR FONCTIONNEMENT MOBILE DANS UNE ZONE DE TRAVAIL

(43) Date of publication of application: 19.08.2020
(73) Proprietor: Stiga S.P.A., 31033 Castelfranco Veneto TV (IT)
(72) Inventor: ROBINSON, Sean, 31033 Castelfranco Veneto (TV) (IT); SCAPIN, Michele, 36061 Bassano del Grappa (VI) (IT); CECCHETTO, Mauro, 35018 San Martino di Lupari (PD) (IT); SCHMIDT, Alexander, 8041 Graz (AT); MOOSBRUGGER, Anton, 8041 Graz (AT)
(74) Representative: Richardt Patentanwälte PartG mbB

(56) References cited:
- EP-A2- 1 406 140
- US-A1- 2011 295 423
- US-A1- 2017 127 607

## Description

The invention relates to a robotic vehicle for soil cultivation, a method for operating a robotic vehicle and a computer program product.

State-of-the-art robotic vehicles are known for soil cultivation. For use in areas with different soil conditions or obstacles on the surface to be machined a precise determination of position of the robot vehicle is necessary. For example, WO2017092798 A1 relates to a robotic work tool for movable operation within a work area. The robotic lawnmower comprises a satellite navigation device; and a controller, the controller being configured to cause the robotic work tool to movably operate within the work area based on positions partly or in whole determined from satellite signals received by the satellite navigation device being a differential satellite navigation device and on phase information received from a reference station.

WO 2012/089679 A1 relates to a method for processing a surface by means of a robotic vehicle, wherein the robotic vehicle has a control system in which data concerning the outline of the surface to be processed are stored, wherein locating means are present, which determine the position of the robotic vehicle, in particular in relation to the surface to be processed, and wherein the method comprises the following steps: dividing the surface to be processed into individual segments; classifying each individual segment to into a property class; and moving to and processing each individual segment in succession, each individual segment being processed with a processing strategy corresponding to its property class.

The US 2011/0295423 A1 refers to a system for autonomous machine management comprising a number of autonomous machines, a number of boundaries, a conditional behavior module, and a navigation system. The number of autonomous machines is configured to perform area coverage tasks in a worksite. The number of nodes is configured to define a number of worksite areas for the worksite. The conditional behavior module is executed by a processor unit and configured to determine whether a number of conditions is met for the number of worksite areas.

The navigation system is configured to operate an autonomous machine to perform the area coverage tasks and move between the number of worksite areas when the number of conditions is met.

The US2017/0127607 A1 refers to a method for creating a visualization of a parcel or garden, which may include receiving information indicative of position data of a robotic vehicle transiting a parcel and corresponding image data captured by the robotic vehicle at one or more locations on the parcel. The method may further include generating a model of the parcel based on the information received, providing a graphical representation of the parcel based on the model, and enabling an operator to interact with the graphical representation to view one or more content items associated with respective ones of the one or more locations.

The EP 1 406 140 A2 refers to a method and a system for performing work on a work path using a machine, using the following steps: defining a work area, the work area being divisible into a number of cells; defining respective geographic factors of the cells within the work area; estimating energy levels, associated with a machine moving in or between adjacent cells, in corresponding proposed directions based on the geographic factors associated with the cells; determining a lowest total energy level for moving the machine in the cells along proposed work paths for the work area, each proposed work path consisting of a series of generally parallel rows along selected ones of the proposed directions; selecting a preferential work path from the proposed work paths consistent with the determined lowest energy level; and moving the machine along the selected preferential work path.

It is an objective to provide for an improved robotic vehicle for soil cultivation, an improved method for operating a robotic vehicle and a computer program product.

The invention is set out in the appended set of claims.

Disclosed is a robotic vehicle for movable operation in a work area, the movable operation comprising a soil cultivation, the work area being represented by a set of discretized coordinate grid points, the vehicle comprising a controller, the controller comprising a memory and a processor, the memory comprising instructions, wherein execution of the instructions by the processor causes the vehicle for planning the movable operation, the planning comprising clustering of at least some of the grid points, wherein the clustering results in sets (clusters) comprising some of the grid points. For a given one of the sets preferably each of the grid points have at least one immediately adjacent grid point in that set, and for all grid points in the sets a value of a parameter characterizing the soil represented by said grid points satisfies a soil criterion for performing the movable operation. Execution of the instructions by the processor further causes the vehicle for performing the movable operation based on the sets of grid points. Generally, each grid point represents a respective area segment, i.e. tile, of the work area.

Embodiments may have the benefit that the movable operation is performed in an efficient manner. Efficiency relates for example to an energy efficiency of the operation, the accuracy of the operation or an efficiency in the care of the soil. For example, the soil is only cultivated if this is necessary at all with regard to the soil properties, whereby the cultivation then actually only takes place for those areas of the soil where the necessity is given. If, for example, the cultivation of the soil involves mowing grass, only those areas of the working area for which a mowing operation makes sense at this time are mown at a certain point in time. If, for example, a cutting height of 5 cm is planned, then those areas could be omitted which have grass with a height of less than 5 cm, since in these areas a grass cut would not take place through the vehicle, which could accelerate the mowing process overall.

A robotic vehicle may be any self-propelled vehicle that autonomously moves within the work area. For example, the vehicle is battery-powered and makes use of the vehicle base the vehicle is able to automatically travel to in order to be recharged.

The soil cultivation may comprise mowing of a lawn, core aerification (recommended practice for many lawns reducing soil compaction and thatch, improve surface drainage etc.), watering of soil areas etc. For example, the robotic vehicle is a robotic lawn mower.

In order to permit the robotic vehicle to determine at which grid point it is actually located, a GNSS based location determination is possible. Alternatively or additionally, any kinds of optical systems, acoustical systems and beacon guidance systems may be used for that purpose. Further, if available, a deduced reckoning navigation device of the vehicle may be used for that purpose.

The planning of the movable operation comprises scheduling the movable operation for obtaining a movement trajectory of the vehicle for performing the movable operation, the scheduling comprising selecting multiple ones (i.e. at least two) of the sets of clustered grid points, the movement trajectory comprising the grid points of the sets of clustered grid points.

It should be noted at this point that clustering, e.g. according to the criterion of a uniform speed of grass growth as the parameter characterizing the soil, could lead to individual grid points not being part of the cluster within an area of the work area in which clustered grid points are located. In extreme cases, for example, every n-th (n being an integer number > 1) grid point within this area could be stochastically excluded from the cluster. This could, for example, be due to the fact that there is a certain error scatter for individual grid points when recording the growth rates of the cluster. For this reason, such an error scatter can be taken into account in the subsequent scheduling so that, in addition to the clustered grid points, unclustered grid points located between the clustered grid points of a set, e.g. unclustered grid points that have at least one immediately adjacent clustered grid point in that set, also become part of the planned movement trajectory of the vehicle.

This may have the benefit that either starting from the desired point in time for example set by a user the actual movable operation is performed, or that the scheduling itself is selecting a most suitable starting point in time based on the clustered grid points starting from which the movable operation can be performed in e.g. a rather efficient manner. For example, an efficient manner would be a manner in which in a consecutive way the majority of clustered grid points of the sets can be covered by a single movement trajectory. Instead of only considering a single cluster alone and scheduling the movable operation for obtaining a movement trajectory for that cluster, all sets of clusters are considered in a coherent way. This would allow efficient processing of the work area.

For example, the clustering may result in 3 sets (i.e. clusters) of grid points that share a common similar value of a parameter characterizing the soil. One approach would be to schedule the movable operation for obtaining a movement trajectory for one of the clusters, perform the movable operation based on that schedule and then to reschedule the movable operation for obtaining a movement trajectory for a next one of the clusters. However, this may be computationally more expensive than to schedule a single movable operation for obtaining a movement trajectory for all of the clusters. This should speed up the total movable operation since it can be optimized and scheduled considering all the clusters. Further, since computational effort is a critical issue in case of battery powered devices like the vehicle and since the vehicle does the scheduling, the scheduling of the single movable operation for obtaining a movement trajectory for all of the clusters supports a prolonged lifetime of the vehicle's battery.

Generally, the clustering results in groups (sets) of grid points that have a maximum small spatial distance between the grid points, also called dense areas. This may also be expressed by means of a particular narrow statistical distribution of distances between the grid points of a cluster.

In accordance with the invention, the movement trajectory obtained for a single contiguous movable operation results in a fragmentation degree of the work area, the fragmentation degree describing the degree of fragmentation of the work area with respect to subareas of the area covered by the trajectory, wherein in case the fragmentation degree is above a predefined fragmentation threshold, the soil criterion is successively relaxed within specified limits until the degree of fragmentation is below the predefined fragmentation threshold.

Fragmentation is understood as follows: if the subareas of the area covered by the trajectory are not continuously and without gaps covered by the trajectory, but there are "pieces of uncovered subareas (fragments) between them, this is understood as a fragmentation.

This may have the benefit that in contiguous manner at rather large part of the work area can be processed by means of the movable operation in a quick manner. Instead of having the vehicle performing the movable operation on the individual sets of clustered grid points each separated by respective unprocessed gaps in the work area, the movable operation may therefore be performed in quicker none interrupted manner. It has to be noted here that each interruption of the movable operation will require, that the vehicle has to perform additional movements in order to compensate for this interruption.

In accordance with an embodiment, the grid points of the set of grid points are distributed over a portion of the working area, the parameter characterizing the soil comprising a slope of the work area, wherein the soil criterion is a minimum average slope of the portion. For example, the minimum average slope is larger than 15%, preferably larger than 20% or 25%. This may have the benefit that the time and/or energy efficiency at which the work area is processed is increased. For example, the moving speed of the vehicle may be reduced for a slope area such that the vehicle has more time to compensate for drag forces dragging the vehicle down the slope. Even though the slower motion of the vehicle may cause the vehicle more time to travel the slope, a repeated processing the slope could be avoided. The repeated processing could result from inaccurate processing of the soil due to the drag forces involved. For example, the vehicle could deviate from its intended trajectory due to the drag forces and lack of compensation speed, so that parts of the ground could remain unprocessed.

In accordance with an embodiment, the movement trajectory is comprising a zigzag form of the trajectory with mutually opposite directions of movement, wherein for two parts of the trajectory running directly adjacent to one another the direction of the movement of the vehicle is respectively opposite with one direction of movement comprising a forward movement and the other direction of the movement comprising a backward movement of the vehicle.

This may have the benefit that the movable operation can be performed in an energy efficient and/or a soil-friendly way. Assuming a rather steep slope, any movement of the vehicle in the direction of the gradient of that slope at a certain grid point may require a lot of engine power of the vehicle to overcome the slope downforce (the gradient points in the direction of the greatest rate of increase of slope at a given point). In addition, the torques applied to the ground by the wheels could cause the wheels to spin, which could damage the ground at this certain grid point. By the zigzag drive and the alternating forward and backward movement of the vehicle excessive turns of the vehicle could be avoided, so that e.g. at no time the vehicle will drive in the direction of the gradient of the slope acting at the appropriate certain grid point.

In accordance with an embodiment, the parameter characterizing the soil is selected from a growth rate of plants to be cultivated and a slip of the vehicle's wheels to be used for the movement of the vehicle on the working area for performing the movable operation. The soil criterion is a selected range of the value of the parameter characterizing the soil, i.e. a selected range of growth rates of the plants or a selected range of slips of the wheels.

Generally, slip is the relative motion between the drive wheel of the vehicle and the soil surface it is moving on. The slip can be generated either by the wheel's rotational speed being greater or less than the free-rolling speed (usually described as percent slip), or by the wheel's plane of rotation being at an angle to its direction of motion (referred to as slip angle). Generally, high traction between wheel and soil is more desirable than low traction, as it allows for movement even on steep slopes without wheel slippage.

Embodiments may have the benefit that a performance of the movable operation e.g. for cultivating the plants is restricted to areas of the plants which indeed require the cultivation. Instead of for example randomly moving around and e.g. trying to cut the plants, e.g. grass, to a certain length, even though no cutting may be required since the plants have not yet grown to that length, only cultivation on a real per-need basis may be performed. In another example there may be areas with fast growing plants and other areas with slow growing plants. By means of the above described method the frequency at which the fast growing plants are cultivated may be "automatically" set higher than the frequency at which the slow growing plants are cultivated.

With regard to the slippage of the wheels of the vehicle, one advantage could be that it would prevent any stirring of the ground due to the slippage. However, since this may require a somewhat adapted driving style of the vehicle, such an optimization is not carried out for the entire working area, but only for those areas for which such a risk of wheel spin is actually present.

In accordance with an embodiment, each grid point has associated a respective value of the parameter characterizing the soil, the clustering comprising a cluster analysis of the parameter values characterizing the soil for identifying groups of ranges of parameter values characterizing the soil, the selected range of the parameter values characterizing the soil being selected from the groups of ranges. For example, 3 clusters of ranges of growth rates of plants could be defined and clustering could be performed with respect to the growth rate given for each grid point.

The determination of the groups or ranges may be performed using e.g. k-means clustering or hierarchical clustering. Generally, cluster analysis has plenty of tools to automate clustering of data such that by means of the cluster analysis the definition of groups of ranges can be adapted to the actual real distribution of values of parameters for the grid points. For example, depending on the time of the season of the year, for all grid points the growth rate of plants may increase of decrease. Instead of using fixed ranges for growth rates which would not consider an overall change in growth rate, the cluster analysis provides a tool to flexibly adapt the ranges to the actual real growth situation.

In accordance with an embodiment, each grid point has associated a respective value of the parameter characterizing the soil, e.g. the growth rate of the plants to be cultivated and located at said grid point or the slip at said point. Execution of the instructions by the processor further causes the vehicle for performing a parameter value prediction, e.g. a growth rate prediction comprising for a given one of the grid points: receiving data valid for said given grid point and being related to the parameter characterizing the soil, e.g. the growth rate of the plants to be cultivated and located at said grid point, and adapting the parameter value characterizing the soil (e.g. the growth rate) associated with the given grid point based on the received data. This may have the benefit that the respective values of the parameter characterizing the soil are not considered as being constant and fixed, but that a certain variability regarding these values is permitted.

For example, the data may comprise data on an environmental factor valid for said given grid point and affecting the parameter characterizing the soil, e.g. the growth rate of the plants to be cultivated and located at said grid point or the slip. The environmental factor may be selected from: sunshine hours, rainfall, soil moisture, fertilization, season, environmental temperature, wind speed, wind direction, air humidity.

For example, the slip may of the vehicle's wheels may vary depending on the wetness of the soil, wherein the slip may also vary in between areas which are exposed to direct and indirect rainfall. The wetness of the soil may also affect the growth rate of plants and different plants in different areas (grid points) may change their growth rate differently even though they are subject to the same amount of rainfall. Generally, it may be known that during certain times of seasons the plant growth may be denser than during other times of seasons, which may also affect the slip of the vehicle's wheels. Sunshine duration and the sun inclination will affect how fast the soil and the plants comprised by the soil (e.g. grass) will dry out which will have a direct effect on the plant's growth rate.

It has to be noted that the data on the environmental factor may either be "live" data, i.e. data reflecting the actual environmental situation of a grid point, or it may be "forecasted" data, i.e. data that provides an assumption on the environmental situation of a grid point for a certain point in time in future. The latter may have the benefit that a clustering can be performed with respect to a precise future planning being possible regarding the performing the movable operation.

The data on the environmental factor may be obtained by the vehicle in various ways. One example is a data measurement by respective sensors of the vehicle or sensors that are located somewhere in close vicinity to the vehicle. The data may be transmitted to the vehicle wirelessly. Another example is that the data is obtained from external resources like weather services via e.g. the internet.

In accordance with an embodiment, the data is comprising a deviation in the value of the parameter characterizing the soil as determined by the vehicle using a comparison of an expected value of the parameter and an actual value of the parameter as measured by the vehicle, both valid for said given grid point. This may have the benefit that the accuracy of the clustering is enhanced by considering real data instead of only making assumptions on e.g. growth rates. For example, growth rates for plants may be estimated using a model. By means of the deviation in the value of the parameter characterizing the soil the model may be tuned or improved over time such that the accuracy of the determination of the growth rates for the grid points may be significantly enhanced. The same holds regarding the slip of the vehicle's wheels which may also be predicted using respective models.

In accordance with an embodiment, the movable operation is comprising a grass cutting operation, the actual growth height being measured by the vehicle during performing the movable operation, e.g. while moving on the trajectory, the measurement of the growth height being performed using at least any of an optical sensor and the power consumption of the motor used to cut the grass. The grass height has a direct effect on the power consumption of the motor - the higher the grass, the higher the power consumption.

In accordance with an embodiment, the scheduling is comprising determining a cultivation point in time for performing the movable operation, the determination of the cultivation point in time being based on: at least some of the values of the parameter characterizing the soil associated with the grid points of the selected one or more of the sets of clustered grid points and a soil parameter threshold required for performing the movable operation, wherein the soil parameter threshold is a threshold of the values of the parameter characterizing the soil. For example, in case of growth rates used as the parameter characterizing the soil, the determination of the cultivation point in time is based on at least some of the growth rates of the plants associated with the grid points of the selected one or more of the sets of clustered grid points and as soil parameter threshold a minimum growth height of plants required for performing the movable operation. For example, in case of the slip being used as the parameter characterizing the soil, the determination of the cultivation point in time is based on at least some of the slip values associated with the grid points of the selected one or more of the sets of clustered grid points and as soil parameter threshold a maximum slip value permitted for performing the movable operation.

In this context, the formulation "based on at least some of the values of the parameter characterizing the soil" may be understood as selecting a suitable approach like the minimum or the maximum or the average of said values of the parameters.

In accordance with an embodiment, the values of the parameter characterizing the soil are comprising values of the slip of the vehicle's wheels associated with the grid points of the selected one or more of the sets of clustered grid points, wherein in case the specific slip value does not satisfy the soil parameter threshold, the cultivation point in time is delayed compared to the case when the specific slip value does satisfy the soil parameter threshold. For example, in this scenario the soil parameter threshold is a maximum of e.g. 10% slip. This means that in case of a slip below 10% a respective specific slip value does satisfy the soil parameter threshold. In case of e.g. an average of 15% slip with regard to all grid points of the selected one or more of the sets of clustered grid points, this would not satisfy the soil parameter threshold such that in this case the cultivation point in time is delayed. The purpose of the delay may be that for example the soil is only cultivated once in a while, such that the stress on the soil caused by driving on the floor stays minimized.

In accordance with an embodiment, execution of the instructions by the processor further causes the vehicle for each grid point of a subset of the grid points at different first points in time performing an initialization process, the initialization process comprising determining by the vehicle the value of the parameter characterizing the soil represented by said grid point. For example, during the initialization process the vehicle randomly moves over the work area and collects information regarding the value of the parameters characterizing the soil. This does not necessarily mean that for each and every grid point the information regarding the value of the parameters characterizing the soil has to be acquired, e.g. measured by optical means or by traction tests carried out by the wheels of the mower. It is possible to for example interpolate the values of the parameters characterizing the soil for grid points uncovered by the measurements of the vehicle based on the values of the parameters acquired for the grid points.

In accordance with an embodiment, the vehicle is comprising a Global Navigation Satellite System, GNSS, receiver, the initialization process further comprising: receiving at the first point in time a first set of GNSS signals from a vehicle base; receiving at the first point in time a second set of GNSS signals from the GNSS receiver; determining an accuracy of a location determination, the location determination being based on the second set of GNSS signals, the determination of the accuracy being based on a comparison of the signal qualities of the first set of GNSS signals and the second set of GNSS signals.

The "vehicle base" is understood as a fixed base comprising a GNSS receiver for receiving the first set of GNSS signals. The purpose of the vehicle base may be manifold. For example, the base could serve as a shelter for the robot to protect it from the weather when the robot is not in use. The base could serve as a charging station for the robot. Or the base could serve as a reference position for the robot, in which case the exact position of the base should preferably be known. In this case a later exact position determination of the robot via differential GNSS (especially differential GPS) is possible. Differential Global Positioning Systems (DGPS) are e.g. enhancements to the Global Positioning System (GPS) which provide improved location accuracy, in the range of operations of each system. A fixed ground-based reference station may be used to broadcast the difference between the positions indicated by the GPS satellite system and its known fixed position. Receiver stations may correct their positions based on that difference.

GNSS signals may be signals originating from satellites of the GPS, GLONASS, Galileo or BeiDou system. The GNSS positioning for obtaining a receiver's position is derived through various calculation steps. In essence, a GNSS receiver measures the transmitting time of GNSS signals emitted from four or more GNSS satellites and these measurements are then used to obtain its position (i.e., spatial coordinates) and reception time.

It has to be noted that that location determination does not have to be performed in such a manner that a real spatial position is obtained from that. It may be sufficient to calculate the uncertainty that may exist in case a determination off the spatial position from the second set of GNSS signals would be performed. Typically, trilateration is used for GNSS based spatial position determination, wherein for the above described accuracy determination it may be sufficient to know "size" of the zone of uncertainty the spheres in trilateration will intersect.

In order to permit the robotic vehicle to determine at which grid point it is actually located, either the second set of GNSS signals may be used for that purpose or other means may be used that permits to determine the actual location of the vehicle. For example, any kinds of optical systems, acoustical systems and beacon guidance systems may be used for that purpose. Further, if available, a deduced reckoning navigation device of the vehicle may be used for that purpose.

Embodiments may have the advantage, that the accuracy of a location determination is available at rather high accuracy. The accuracy of GNSS data may depend on many factors. One source of errors in the GNSS position accuracy originate from multipath effects. Multipath occurs when part of the signal from the satellite reaches the receiver after one or more reflections from the ground, a building, or another object. First at all, these reflected signals can interfere with the signal that reaches the receiver directly from the satellite. Second, due to the range delay in multipath due to the result of the reflection of the GNSS signal the position as determined using such a multipath signal is falsified. Another source of errors are weak signals. Signals from other high-frequency transmitters can interfere with the GNSS receiver even at low field strengths, resulting in measurement errors and interference from high-frequency signals. Potential sources of interference may for example include harmonics of the transmission frequencies of TV and radio transmitters, mobile telecommunication system networks and radar transmitters.

By comparing the signal qualities of the first set of GNSS signals and the second set of GNSS signals the (hypothetical) accuracy of a location determination based on the second set of GNSS signals is not solely relying on this second set of GNSS signals but also considers the first set of GNSS signals. The signal qualities like signal-to-noise ratios or signal intensities of the first and second set of GNSS signals may permit to identify and omit parts of the second set of GNSS signals that are of low quality, i.e. that may be multipath signals, signals disturbed by interreference with other non-GNSS-based signals etc.

In one example, an obstacle may shadow GNSS reception partially at a certain grid point and point in time. In case the accuracy of location determination would solely be based on the second set of GNSS signals, such a grid point may erroneously be evaluated as a good grid point which position is reliably determinable using GNSS signals, even though the respective position determination would be rather imprecise due to multipath errors and interreferences. By additionally considering the first set of GNSS signals that was recorded at that point in time, e.g. multipath errors can be easily detected due to the spatial distance of the vehicle base GNSS receiver from the vehicle GNSS receiver and most probably the absence of similar GNSS signal reflections at the vehicle base and the GNSS receiver.

For example, execution of the instructions by the processor causes the vehicle for performing the movable operation based on the determination of the accuracy.

In accordance with an embodiment, execution of the instructions by the processor further causes the vehicle for performing the planning the movable operation based on at least some of the grid points for which an accuracy of the location determination is available and the accuracy of the location determination.

This may have the benefit that navigation of the vehicle for performing the movable operation like e.g. mowing a lawn can be performed at a rather high precision since only grid points are considered here for which it can be made sure that an accuracy of the location determination is available. For example, by considering the accuracy of the location determination only such grid points may be traveled during the movable operation for which a certain minimum quality of navigation preciseness can be met.

In accordance with an embodiment of the invention the first and second GNSS signals are received from satellites that are located at certain satellite positions in the sky above the base and the vehicle, the comparison of the signal qualities of the first set of GNSS signals and the second set of GNSS signals resulting in a quality number per satellite position. This may permit to have a basis for evaluating the quality of a certain satellite position for e.g. usage of the respective satellite GNSS signals for the accuracy determination of the location determination.

In accordance with an embodiment, execution of the instructions by the processor causes the vehicle further for performing a predicting process for at least some of the grid points, the predicting process forecasting the accuracy of a location determination for points in time future to the respective first point in time. This may be beneficial in case during the initialization process some of the coordinate grid points of the work area where missed or not covered. By means of the predicting process it may be possible to obtain a contiguous area on which the vehicle can operate. The predicting process may be the same process that is used to adapt the parameter value characterizing the soil associated with the given grid point based on the received data.

In accordance with an embodiment, the predicting process forecasting the accuracy of the location determination for at least some of the grid points of the subset is using at least one of GNSS Ephemerides, Almanacs and satellite repeat cycles applied on the first or second set of GNSS signals received at the respective first point in time. Broadcast ephemerides are forecasted, predicted or extrapolated satellite orbits data which are transmitted from the satellite to the receiver in the GNSS signal. Alternatively or additionally daily GNSS broadcast ephemeris files may be used which are may be downloaded e.g. via a wide area network and which a merge of the individual GNSS data files into one file. Compared to GNSS ephemerides, the GNSS almanacs contains less accurate orbital information than ephemerides, however with longer validity. The repeat cycle of a describes the fact that a satellite generally follows an elliptical path around the Earth. The time taken to complete one revolution of the orbit is called the orbital period. The satellite traces out a path on the earth surface, called its ground track, as it moves across the sky. As the Earth below is rotating, the satellite traces out a different path on the ground in each subsequent cycle. The time interval in which nadir point of the satellite passes over the same point on the Earth's surface for a second time (when the satellite retraces its path) is called the repeat cycle of the satellite.

Any of these GNSS Ephemerides, Almanacs and satellite repeat cycles may be used to predict at which point in time in the future a satellite constellation may be available again that in a certain manner reflects the satellite constellation for the given grid point that was given during the initialization phase. This may permit a reliable and easy future planning of future movable operation of the vehicle. Simply spoken, in case for certain satellite constellation at a certain the grid points and time the accuracy of location determination that was considered as being a good, this fact can be used at the future point in time thus also knowing in that in that future point in time the quality of position determination of the vehicle will be also good.

In accordance with an embodiment, the predicting process forecasting the accuracy of the location determination is comprising: forecasting a reception of first or second GNSS signals for said points in time future to the first point in time from satellites located at a sky area around the certain satellite positions, the accuracy of the location determination being forecasted using the forecasted reception of the first or second GNSS signals.

This may have the benefit that only GNSS signals originating from satellites and is sky area in close vicinity to the certain satellite positions are used for forecasting the reception of the first and second GNSS signals for a future point in time. As mentioned above, this may permit a reliable and easy future planning of future movable operation of the vehicle.

For example, per satellite position the forecasting of the accuracy of the location determination is performed using either the forecasted reception of the first GNSS signals weighted by the quality number of that satellite position or the forecasted reception of the second GNSS signals excluding GNSS signals from satellite positions for which the quality number does not fulfill a first minimum quality criterion.

Here, the first alternative realizes that certain first GNSS signals may be blocked at the grid point due to obstacles. Blocking may be only partially or completely, which however has certain negative effect on the quality of position determination. The weighting of a first GNSS signal received from certain satellite position with the quality number of that satellite position therefore accounts for that possibility that in the end that satellite position may be partially or fully shadowed and therefore not be fully available for a high-quality location determination. The quality number may for example be a ratio between the second GNSS signal and the first GNSS signal intensities or S/N-ratios. Any other means that reflect the quality of a received signal may also be employed here.

In the second alternative only the second GNSS signals our used, however with the limitation that GNSS signals are excluded in case the quality number does not fulfill certain first minimum quality criterion. This may have the benefit that satellite signals are excluded from any forecasting of signal receptions from which it is known that they may negatively influence the location determination procedure.

In accordance with an embodiment, the sky above the base and the vehicle is represented by a set of discretized zones, the sky area around a certain satellite position being confined by the boundaries which confine the zone in which the satellite position is located. For example, the sky above the GNSS receiver of the vehicle may be projected onto a 2D matrix represented by a coordinate grid, the coordinate grid forming individual zones. A skyplot provides the possibility to represent satellite positions within such a 2D matrix in a polar projection. The position of the satellite inside the outer circle of such a skyplot indicates the two angles azimuth and elevation. The azimuth may be drawn as central angle and the elevation may be provided as circle radius. Different elevations may correspond to individual grid circles of respectively different diameters. The individual azimuth angles may be represented as lines originating from the center of the skyplot towards the outer circle. These lines therefore also correspond to parts of the coordinate grid. In total, the coordinate grid is made up of the circles and the lines.

By using a skyplot it is not necessary to just rely on a single exact satellite position in the sky but to account for the fact that certain variation of the given satellite position in the sky around that satellite position will not significantly affect the total quality of location determination in case the reception conditions of signals from this satellite position was considered as being good or sufficient enough.

In accordance with an embodiment of the invention, the predicting process is further comprising determining a sky area of good reception which comprises at least some of the certain satellite positions for which the quality number of that satellite position fulfills a first minimum quality criterion, the sky area around a certain satellite position being confined by the boundaries which confine the sky area of good reception. This may be beneficial in case the higher number of satellites are available for which the quality of signal reception is rather good. In case the satellites are evenly distributed over the sky, certain shadow areas may be easily the identifiable. In the case from the satellite positions for which the quality number fulfills the first minimum quality criterion it is possible to draw as a contour line regarding the shadowed area, any position the of the sky outside the shadow area can be considered as the area of good reception. As a consequence, it may again not be necessary to just rely on a single exact satellite position in the sky but to account for the fact that a variation of location of the satellite positions within the area of good reception in the sky will not significantly (if at all) affect the total quality of location determination.

In accordance with an embodiment, the determination of the accuracy of the location determination is only considering GNSS signals from satellite positions for which the quality number of that satellite positions fulfills a first minimum quality criterion. This principle may be applied as a general rule within the whole described process as it may ensure that the determination of the accuracy of the location determination is only performed with the respect to signals that meet a certain quality. It has to be noted that the quality number may comprise, as described above, a ratio between the second GNSS signal and the first GNSS signal intensities or S/N-ratios.

The quality number may also rate the position of the individual satellites in the sky. For that purpose, a weighting of the quality number by the Dilution of precision (DOP) may be used such that for certain unfavorable satellite constellations the respective quality numbers may be automatically negatively influenced. Generally, the relative satellite-receiver geometry plays a major role in determining the precision of estimated positions. When visible navigation satellites are close together in the sky, the geometry is said to be weak and the DOP value is high; when far apart, the geometry is strong and the DOP value is low. Thus, a low DOP value represents a better positional precision due to the wider angular separation between the satellites used to calculate the vehicle's position.

In accordance with an embodiment, in case with respect to a given grid point the quality number for a certain satellite position does not fulfill a first minimum quality criterion, for that grid point any GNSS signals from said satellite position are excluded for the planning of the movable operation. In case for example the vehicle is crossing a given grid point multiple times and it occurs once that a GNSS signals from a certain satellite position does not fulfill the first minimum quality criterion, for the planning of the movable operation GNSS signals originating from that certain satellite position will always be excluded, irrespective if later on the quality of GNSS signals originating from that certain satellite position may improve. This may have the benefit that for all times a rather robust approach is provided based on which a precise navigation of the vehicle is possible using as trajectory at least part of the grid points for which then accuracy of the location determination is available and the accuracy of the location determination is sufficiently high. For example, a large vehicle like for example a caravan may obstruct at a given grid point some GNSS signals from certain satellite positions. Irrespective if the caravan is present or not, the approach is based on the worst-case scenario in which the caravan is present regarding the planning of the movable operation. Thus, it may be ensured that soil cultivation will be possible at high positioning precision, irrespective if the caravan is there or not.

This principle of exclusion of satellite positions holds true for both, the initialization phase in which state of for the same grid points may be recorded multiple times as different points in time, as well as for the actual soil cultivation process, i.e. the movable operation during which a grid point used in the initialization phase or later may also be crossed once or multiple times.

In accordance with an embodiment, the predicting process is comprising an interpolation, the interpolation being performed for at least some of the grid points for which the accuracy of a location determination for points in time future to the respective first point in time is yet unavailable, the interpolation considering grid points e.g. directly adjacent to each other for which the accuracy of a location determination for points in time future to the respective first point in time is available, the interpolation resulting in estimated accuracies of location determination for the grid points for which the interpolation was performed. As mentioned above, the interpolation may also be used to interpolate the values of the parameters characterizing the soil for grid points uncovered by the measurements of the vehicle (for which no parameters characterizing the soil are yet available) based on the values of the parameters acquired for the grid points.

This may have the benefit that it is not necessary to have an initialization phase that covers all grid points of the work area and which consequently it would take significant amount of time for GNSS acquisition. Instead, the interpolation is performed which assumes that for example for neighboring grid points the variation in location determination accuracy will only vary by small amounts. The interpolation may further consider the course of the location determination accuracy between different grid points, such that with a rather high precision an estimation can be made regarding the location determination accuracy for neighboring grid points.

In accordance with an embodiment, during the initialization process the vehicle is randomly moving within the work area, the random movement directing the vehicle to the grid points of the subset of the grid points. For example, the grid points of the subset may result from the random movement of the vehicle. Vice versa it is also possible that the grid points of the subset are randomly selected and that the vehicle is then directed randomly to these grid points. Generally, this may have the benefit that the individual grid points are more or less evenly distributed over the work area such that each for example the above-mentioned interpolation is effectively available for being performed for a large number of grid points. A further benefit may be that due to the random distribution of the grid points when aborting the initialization process it is highly probable that the accuracy of a location determination is available for a more or less equally distributed subset of the grid points. This would be helpful for providing a good coverage of the work area with accuracies of location determination being directly available via the received GNSS data or indirectly available via interpolation for the major part of the work area.

In accordance with an embodiment, the planning of the movable operation comprises the clustering of at least some of the grid points, e.g. based on the criterion that the clustering is performed for at least some of the grid points for which the accuracy of the location determination is available, the clustering resulting in the sets of clustered grid points, wherein for each set of the clustered grid points starting from a respective second point in time moving of the vehicle along said set of clustered grid points guided using a third set of GNSS signals received from the GNSS receiver during said movement is possible with an accuracy of the location determination during the guiding fulfilling a second minimum quality criterion. Preferably, for a given one of the sets each of the grid points have at least one immediately adjacent grid point in that set.

The clustering may have the benefit that a basis is provided on which a scheduling of the moveable operation is possible in an easy manner. Generally, the clustering ensures that starting from a certain time in future the vehicle is able to navigate along grid points of a set of clustered grid points in such a manner, that the quality of navigation is sufficiently high, i.e. that a precise navigation in terms of location determination is guaranteed.

A navigation of a vehicle is understood as a guiding of the vehicle to a desired grid point using the vehicle's position detector to determine the vehicle's real position relative to the desired grid point.

In accordance with an embodiment, the work area is comprising boundaries confining the work area, wherein for grid points lying within a predefined boundary zone bordering the boundaries the second minimum quality criterion is tightened up, for example by a relative value, for example a value in between 10% and 30%. This may have the benefit that an unintentional movement of the vehicle out of the work area is prohibited due to an imprecise location determination at the boundaries of the work area. The predefined boundary zone may be an edge strip with a given width, which borders with a side directly to the boundaries.

In accordance with an embodiment, at least one of the predicting process and the clustering are comprising for a grid point: adjusting the associated accuracy of location determination taking into account that the position determination is additionally performed using a deduced reckoning position estimate obtained from a deduced reckoning navigation device of the vehicle. For example, the taking into account that the position determination is additionally performed using the deduced reckoning position estimate is restricted to grid points located within a maximum predefined distance from a grid point for which the unadjusted associated accuracy of location determination fulfills the second minimum quality criterion.

A "deduced reckoning navigation device" may comprise anyone of a direction component that can receive x-axis and y-axis acceleration information from sensors, e.g., gyroscopes and accelerometers, gravitational sensors. Further, it may comprise compresses, odomemetric sensors etc. Odometric sensors are generally motion sensors which provide motion in formation for usage in odometry, i.e. an information about a change in position over time. Odometry makes for examples usage of the knowledge about the vehicles driving wheel circumference and recorded wheel rotations and steering direction in order to calculating the vehicle's current position by using a previously determined (reference) position. Generally, a deduced reckoning navigation device in the context of the present disclosure is a device that besides GNSS signal information uses any available sensor information for dead reckoning. In navigation, dead reckoning is the process of calculating one's current position by using a previously determined position, or fix, and advancing that position based upon known or estimated speeds over elapsed time and course.

This is based on the insight that even without a high-quality tea GNSS location determination being available, starting from a precisely known location and using additionally that deduced reckoning position estimate it is still possible to supplement the GNSS location determination with additional deduced reckoning position data standing for example from odometry, such that in total the accuracy of location determination is sufficiently high for performing the movable operation.

Since the usage of the deduced reckoning position estimate is restricted to grid points located within a maximum predefined distance from a grid point, it may be ensured that location determination errors occurring when using the deduced reckoning position estimate are not accumulating in a manner that the total accuracy of location determination would be influenced in a negative manner.

In accordance with an embodiment, the planning of the movable operation is comprising scheduling the movable operation for obtaining a movement trajectory of the vehicle for performing the movable operation, the scheduling comprising selecting one or more of the sets of clustered grid points, the movement trajectory comprising the grid points of the sets of clustered grid points. This may have the benefit that either starting from the desired point in time for example set by a user the actual movable operation is performed, or that the scheduling itself is selecting at most suitable starting point in time based on the clustered grid points starting from which the movable operation can be performed in e.g. a rather efficient manner. For example, an efficient manner would be a manner in which in a consecutive way the majority of clusters grid points can be covered by the movement trajectory.

In accordance with an embodiment, execution of the instructions by the processor further causes the vehicle for performing the movement of the vehicle to said selected one or more of the sets of clustered grid points and repeating the steps of the initialization process during the movement for the grid points traveled during the movement and with the first point in time being the actual point in time of movement on the respective grid point. Additionally or alternatively it is possible to acquire parameter values characterizing the soil and use these values to update existing values for the respective grid points, e.g. adapt the parameter values as described above or to assign parameter values in case the respective have not yet the e.g. measured or determined parameter values assigned.

As a consequence, the available data regarding location determination accuracy is more and more completed with real measurements data of GNSS signals for different points in time. For example, the movement of the vehicle may also in walls movement over grid points for which only interpolation accuracy data is available. This interpolation accuracy data can then be completed by real measurement data based on GNSS signals. That repetition of the steps of the initialization process may also involve further interpolation, predicting and taking into account that the deduced reckoning position estimate may be used.

In accordance with an embodiment, the vehicle is further comprising a compass, wherein execution of the instructions by the processor further causes the vehicle for performing the planned movable operation resulting in a movement of the vehicle, wherein in case moving of the vehicle guided using the GNSS signals received from the GNSS receiver during said movement is not possible any more with an accuracy of the location determination during the guiding fulfilling a fourth minimum quality criterion: determining the heading of the vehicle using the compass, determining the compass direction in which the area lies, in which the vehicle was last guided with the accuracy of the location determination during the guiding fulfilling the second minimum quality criterion. This may be considered as for example a backup solution in a case for whatever reason the vehicle gets displaced in an unforeseen manner from the position in which the vehicle was last guided. For example, the vehicle may get offset by being hit by person or an animal or the vehicle may start to slip into a certain direction on a step hill. With the fourth minimum quality criterion having a requirement on quality lower than the second minimum quality criterion, the vehicle may not be able to determine its actual location in the precise manner. Nevertheless, by using the heading of the vehicle using its compass and the compass direction in which the area lies in which the vehicle was last guided with the accuracy of the location determination during the guiding fulfilling the second minimum quality criterion, it is possible to turn the vehicle and move it towards the area using a compass based navigation approach.

In another aspect, the invention relates to a method for operating a robotic vehicle for movable operation in a work area, the movable operation comprising a soil cultivation, the work area being represented by a set of discretized coordinate grid points, the method comprising planning the movable operation, the planning comprising clustering of at least some of the grid points, wherein the clustering results in sets comprising some of the grid points, wherein preferably for a given one of the sets each of the grid points have at least one immediately adjacent grid point in that set, and for all grid points in the set a value of a parameter characterizing the soil represented by said grid points satisfies a soil criterion for performing the movable operation, wherein the movable operation is performed based on the sets of grid points. This method may for example be a computer implemented or it may be realized by an Application-Specific Integrated Circuit (ASIC).

In another aspect, the invention relates to a computer program product comprising computer executable instructions to perform the method as described above.

The above described examples and embodiments may be combined freely as long as the combinations are not mutually exclusive. It further has to be noted that in case above it is understood that any mentioned first minimum quality criterion is always the same first minimum quality criterion, any mentioned second minimum quality criterion is always the same second minimum quality criterion.

In the following, embodiments of the invention are described in greater detail in which
Figure 1 shows robotic vehicle performing an initialization process in a work area,
Figure 2 shows different modes of performing the movable operation on a flat and sloped area,
Figure 3 is a schematic illustrating the fragmentation of sets of clusters a work area,
Figure 4 is a schematic illustrating the fragmentation of sets of clusters a work area,
Figure 5 is schematic of robotic vehicle,
Figure 6 is a flowchart of a method for operating a robotic vehicle,
Figure 7 shows robotic vehicle performing an initialization process in a work area,
Figure 8 illustrates an exemplary skyplot as seen from the vehicle,
Figure 9 shows different combined skyplots at different points in time for the given grid point,
Figure 10 shows a first set of clustered grid points with respect to a given starting time point,
Figure 11 shows a second set of clustered grid points with respect to another a given starting time point,
Figure 12 is a flowchart of method for operating a robotic vehicle,
Figure 13 is a flowchart illustrating a clustering process.

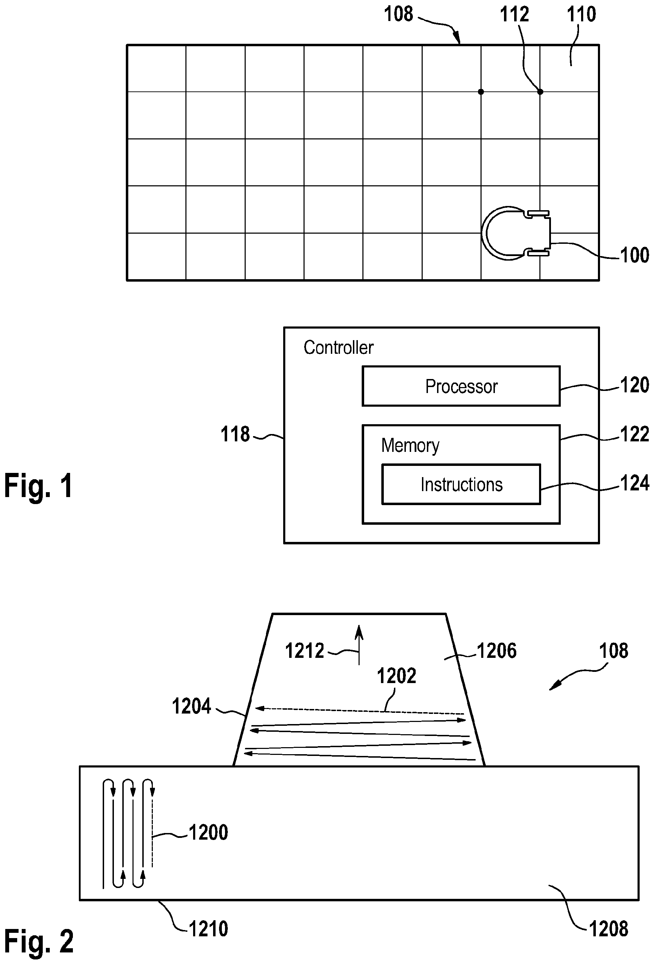

In the following similar features are denoted by the same reference numerals. Without restriction to generality in the following it is assumed that the robotic vehicle is a lawnmower and that the soil cultivation is the mowing of the lawn of a work area. Figure 1 illustrates a lawnmower 100 located within a work area 108 to be processed. The work area 108 is represented by a set of discretized coordinate grid points 112. As a result, the work area 108 is divided up into set of individual tiles 110.

The vehicle 100 is comprising a controller, which is illustrated in the inset of figure 1. The controller 118 comprises a processor 120 and a memory 122. That memory stores instructions 124, wherein execution of the instructions by the processor causes the vehicle for planning a movable operation, the planning comprising clustering of at least some of the grid points, wherein the clustering results in sets comprising some of the grid points. For a given one of the sets, preferably each of the grid points have at least one immediately adjacent grid point in that set, and for all grid points in the set a value of a parameter characterizing the soil represented by said grid points satisfies a soil criterion for performing the movable operation. Execution of the instructions by the processor further causes the vehicle for performing the movable operation based on the sets of grid points.

For example, the vehicle 100 is an autonomous mowing robot and the working area 108 is a lawn to be mowed. The soil thus has grass blades that have to be mown to a certain length by the lawn mower 100. In order to avoid permanently arbitrarily mowing the lawn, even if this were not necessary at all, clustering is carried out by means of the instructions 124. Clustering results in sets of grid points, where the grid points of a set have one thing in common, for example a minimum grass length. Another possibility could be that the clustered grid points have one thing in common with regard to the traction with which the mowing robot can move on the lawn. Another common feature could be that the clustered grid points are all located in an area with a similar slope inclination.

The result of the latter variant of clustering is shown in Figure 2 below. In Figure 2, the work area 1108 is clustered into two areas 1208 and 1204, where the area 1208 has an average slope inclination of 10% and the area 1204 has an average slope inclination of >25%. The movement trajectory 1200 and 1202 of the mowing robot are each adapted to a clustered area. In the area 208, the movement trajectory 1200 is shaped in such a way that the mowing robot travels in parallel paths through the area 1208 and performs a 180° turn with each reaching of the area limit 1210. In Figure 2, for example, the paths extend in the direction perpendicular to the longitudinal extension of area 1208. However, this can also be done parallel to the longitudinal extension of area 1208.

With regard to the area 1204, which thus has a clustered set of grid points for which the average slope inclination is greater than 25%, the movement trajectory 1202 is changed compared to the movement trajectory 2100 in such a way that no 180° turn of the mowing robot takes place when the area boundary 1204 is reached, but the mowing robot merely reverses its direction of movement and performs a minimal rotational movement in the area of the area boundary 1204, for example by 10°. This minimal rotary movement is dimensioned in such a way that, with regard to the opposite movement of the mowing robot, the current mowing area overlaps with the mowing area of the previous direction of movement. The trajectory 1202 runs essentially perpendicular to the average gradient direction 1212 of the area 1204.

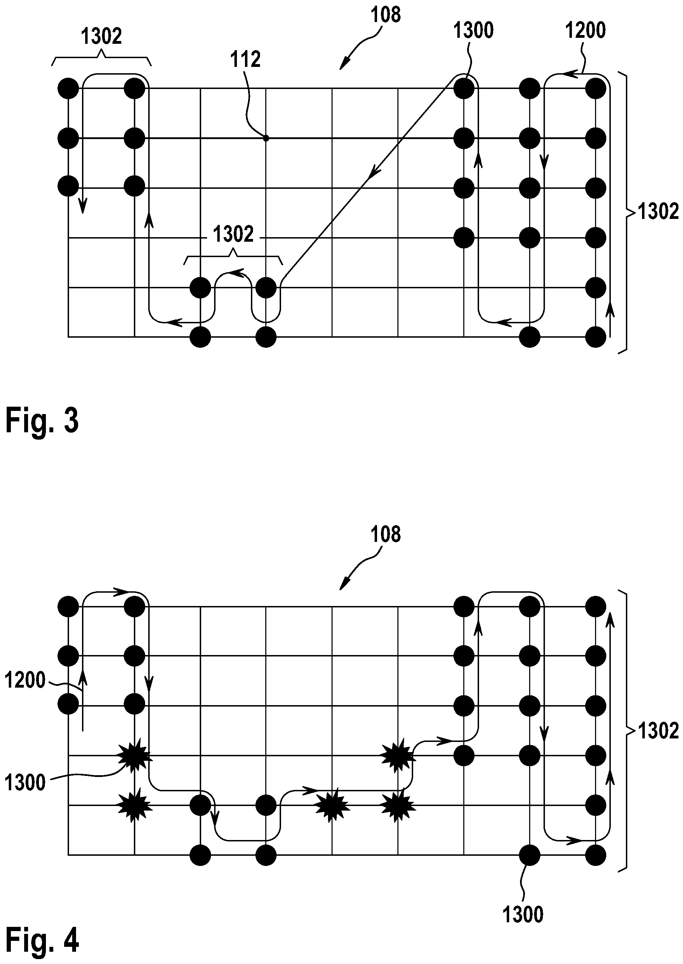

Figure 3 exemplarily shows the result of a clustering. With regard to lawn 108, 3 sets of cluster grid points 300 resulted from the clustering, namely sets 1302. As can be seen in Figure 3, these three sets are spatially separated from each other, i.e. cannot be traversed without a gap. This would mean, for example, that after the start of the mowing operation with regard to the right cluster 1302, the mowing robot would have to cover a distance to the middle cluster 1302 without being able or allowed to mow in this respect. The same applies to the distance the mowing robot would have to travel between the middle cluster and the left cluster. A corresponding trajectory 1200 is shown in Figure 3, starting with cluster point 1300 at the bottom right.

In order to increase the efficiency of any mowing operation, it is proposed to analyze the degree of fragmentation with respect to the areas covered by the trajectory 1200 (given by the sets 3102 of grid points 1300). If the fragmentation is too high, the criteria for clustering can be progressively relaxed until a fragmentation results that is desired. If, for example, the criterion for clustering in Figure 3 was that the parameter value "grass height" was at least 6 cm, this parameter value could now be reduced to a grass height of 5 cm. If, for example, the mowing robot cuts the lawn to a length of 5 cm when driving on the trajectory, the trajectory could also include areas where it is pointless to cut, since the length of the lawn is already 5 cm. However, all intermediate areas of grass lengths >5 cm are covered.

The result of loosening the parameter value "grass height" to 5 cm is shown in Figure 4. The clustered grid points 1300 marked with a star are now additionally contained in the set of grid points of the cluster 1302, so that now a trajectory 1200 can be selected, which starts at the top left and covers all cluster points continuously to the top right.

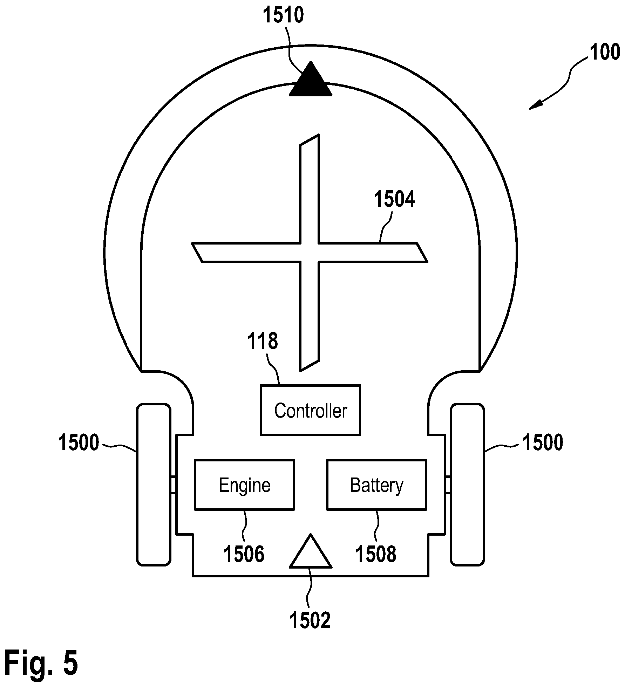

Figure 5 illustrates a schematic of a robotic lawnmower 100 which comprises a GNSS receiver 1510 and a further sensor 1502 that may be used as a deduced reckoning navigation device in order to support the determination of the location of the lawnmower 100. For example, the sensor 1502 is a camera or a radar sensor which is able to acquire precisely a movement and/or location of the mower 100. The rotation of the wheels 1500 may also be used for obtaining a deduced reckoning position estimate. The lawnmower 100 further comprises a rotating blade 1504 for cutting grass and the controller 118. An engine 1506 is powered by a battery 1508, wherein the engine 1506 is coupled to the wheels 1504 moving the mower from the one grid points to the next grid point. The battery 1508 may be recharged using a base which is somewhere located either within the area 108 or on the outside border of the area 108.

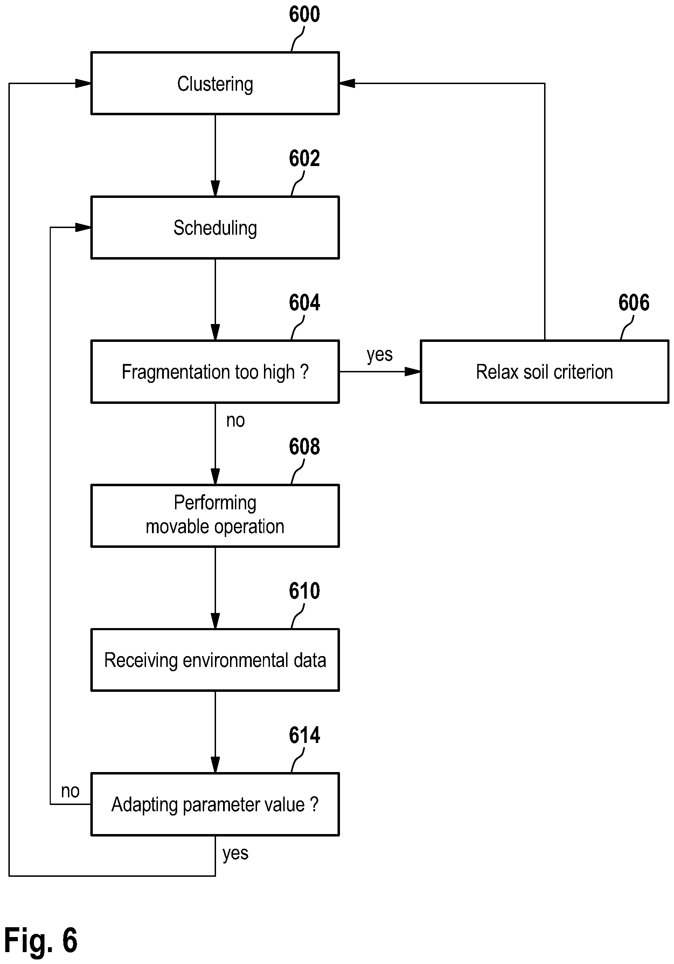

Figure 6 is a flowchart illustrating a method of operating a robotic vehicle for movable operation in a work area. The method starts with step 600 and the clustering of at least some of the grid points of the work area. Generally, for a set of clustered grid points a value of a parameter characterizing the soil represented by said grid points satisfies a soil criterion for performing the movable operation. For example, the parameter characterizing the soil may be a slip of the vehicle's wheels to be used for the movement of the vehicle on the working area for performing the movable operation. In this case, the soil criterion could be a selected range of slips, e.g. from 0-10%. This means, that all grid points for which the slip is in between 0 and 10% will be clustered into one set of grid points. It has to be noted, that the following discussion can be analogously adapted to other parameters like growth rate of plants, slope of parts of the work area etc.

This is followed by a scheduling process in step 602 which selects sets among the sets of clustered grid points obtained from step 600. For the selected sets, a movement trajectory for the vehicle is determined. This movement trajectory covers all the selected sets of clustered grid points.

In step 604 it is checked whether the degree of fragmentation of the work area with respect to subareas of the area covered by the trajectory is above a predefined fragmentation threshold. For example, in case the subareas of the area covered by the trajectory are not seamlessly (with regard to grid points) concatenated by the trajectory, a certain fragmentation results. In case the fragmentation is above the predefined fragmentation threshold, the method continues with step 606 and the relaxation of the soil criterion within specified limits. In the above example the selected range of slips may be relaxed, e.g. to 0-15%. Then the method continues as described above with step 600.

In case the fragmentation is below the predefined fragmentation threshold, the method continues with step 608 and the performance of the movable operation. During the performance of the movable operation and/or independent of the movable operation, the vehicle receives in step 610 environmental data. The environmental data describes for example a predicted rainfall or an actual rainfall with regard to the work area. The resulting wet surface of the work are may directly influence the slip of the vehicle.

The method may either continue with step 614 with a check, if an adaptation of the parameter values "slip" available for the grid points is to be updated regarding the new environmental data or not. An adaptation of the parameter values for the grid points may also affect the clustering, such that the method may continue with step 600. This could go so far that even the current movement process of the vehicle is aborted, and the trajectory in step 602 results in a changed manner after a new calculation.

It should be noted that the environmental data in step 610 can also contain measurement data, for example regarding the current growth height of the plants to be processed. If, for example, assumptions were made about the growth rate of the plants to be cultivated after an initial recording of parameters, for example during an initialization phase of the vehicle, these assumptions may not have been completely accurate. Since Clustering 600 always focuses on future processing of the work area, i.e. requires certain predictions of plant growth, the measurement data obtained in step 610 could be used to optimize the model used to predict the growth rate. This optimization then takes place in step 614.

If no adjustment of the parameter values or even an optimization of the model is necessary in step 614, the procedure continues in step 602, where the scheduling is performed for future times. If it is necessary to adjust the parameter values, the procedure continues with a new clustering in step 600.

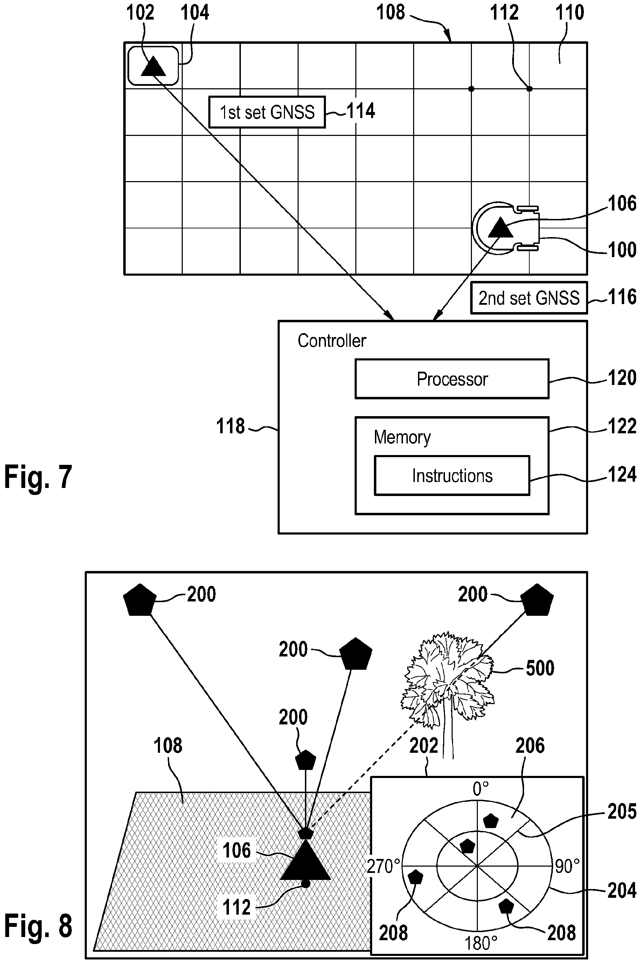

Figure 7 is based on figure 1 and additionally shows that the vehicle 100 is comprising a GNSS receiver 106. Additionally to the features described above, the initialization process to be carried out based on the instructions 124 comprises receiving for given grid point at a certain time point at first set of GNSS signals from the vehicle base 104 which itself comprises a respective GNSS receiver 102. The base 104 is fixed and not movable, whereas the vehicle 100 can move over the lawn 108 to different grid points.

At each grid point and respective point in time the initialization process comprises receiving a first set of GNSS signals 114 from the GNSS receiver 102 and receiving a second set of GNSS signals 116 from the GNSS receiver 106. The first set of GNSS signals and the second set of GNSS signals were acquired at the same point in time by the respective GNSS receivers. The controller uses these two sets of GNSS signals using its instructions 124 to determine an accuracy of location determination based on a comparison of the signal qualities of the first and second set of GNSS signals 114 and 116, respectively. It will be understood that any further algorithms and computational approaches that will be discussed below are also performed by the controller using the instructions 124.

As illustrated in figure 8, at a given grid point 112 the receiver 106 receives the GNSS signals 116 and 114 from different satellites 200 located at various satellite positions in the sky above the vehicle and the base. For some of the satellites 200 there may exist a direct line of sight between the GNSS receiver 106 and the respective satellite, whereas some GNSS signals may be blocked by obstacles, like for example the tree 500 as illustrated in figure 8. As a consequence, the signal qualities of the second set of GNSS signals 116 may variety from satellites to satellite.

The location of the satellite positions in the sky above the vehicle and the base may be represented using a skyplot 202, as illustrated in the inset of figure 8. The skyplot 202 is represented by a coordinate grid 204 and 205 forming individual zones 206. The position of the symbols 208 inside the outer circle 204 the skyplot indicate the satellites 200 at two angles azimuth and elevation. The azimuth is drawn as central angle and the elevation is provided as circle radius. Different elevations correspond to individual grid circles of respectively different diameters. The individual azimuth angles are represented as the lines 205 originating from the center of the skyplot towards the outer circle.

In the following it is assumed that the base has a full view of all satellites in the sky above a certain minimum elevation angle. Further it is assumed, that either the first set of GNSS signals 114 is uncorrected by the controller 118 when comparing the signal qualities of the first set of GNSS signals and the second set of GNSS signals. Uncorrected means here that the skyplots of the base and the mower are not adapted with respect to each other due to a different perspective the respective GNSS receivers have on the same satellite constellations. This is because typically the mower 100 and the base 104 are located at rather short distances relative to each other in such a manner that the position of satellites within the respective skyplots only differ from each other within an irrelevant amount. The only requirement is that GNSS signals from different satellites as seen from the base and the mower can be associated with each other for performing the comparison of the signal qualities. However, in case the base 104 and the mower 100 are located at larger distances away from each other, the respective positions of the satellites 208 in the skyplots may be adjusted taking into account the different locations of the base and the mower.

With respect to the GNSS signals from a given satellite, these signals are compared with each other resulting in a quality number per satellite position. For example, the signal-to-noise ratios SN of the GNSS signals of a GNSS satellite at the base (SN1) and the mower (SN2) are used for that purpose. The quality number Q may then be given by the quotient Q=SN2/SN1. In case the quotient Q is close to 1, this corresponds to a good signal quality and in case the quotient Q is close to 0, this corresponds to a bad signal quality.

In a first step, for the given grid point any GNSS signals from satellite positions will be ignored for which the quality number Q does not fulfill a first quality criterion. For example, the first quality criterion may be that the signal quality needs to be higher than 0.8. In the below example the satellite located in the zone number 7 is excluded from any further accuracy calculations of the vehicle location because its quality number is below the quality criterion.

| Zone 206 | Quality Number Q |
|---|---|
| 3 | 0.95 |
| 7 | 0.3 |
| 9 | 0.85 |
| 13 | 0.9 |
| ... | ... |

From all remaining satellite positions and the corresponding GNSS signals a practical or hypothetical accuracy of a location determination is calculated. This results in the following assignment of time point t of GNSS data acquisition, grid point GP and accuracy A:

| t | GP | A |
|---|---|---|
| 27.04.2017, 08:43:12 | (12;56) | 5cm |
| 28.04.2017, 13:37:19 | (12;56) | 8cm |
| 27.04.2017, 08:44:46 | (12;59) | 5cm |
| ... | ... | ... |

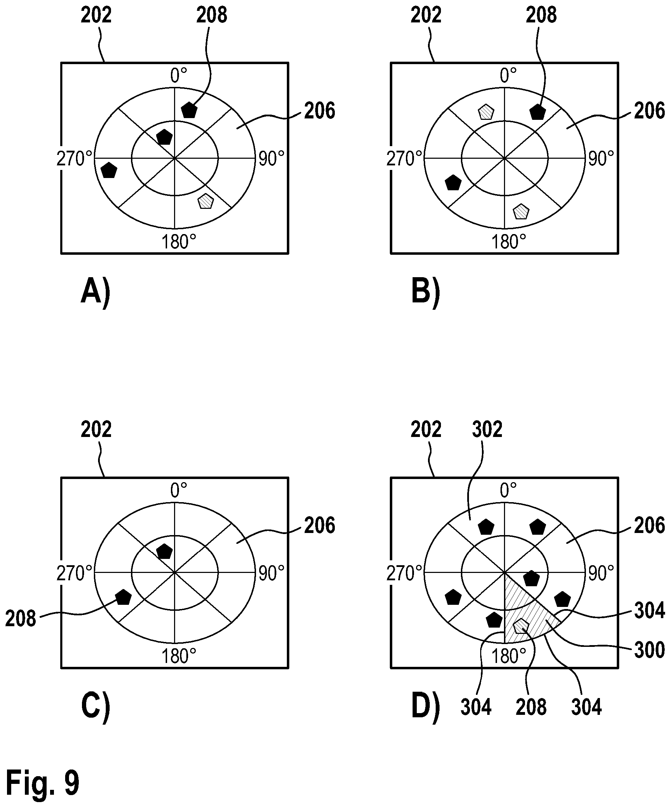

The content of the skyplot is illustrated in figure 9 for different points in time for a given grid point. The skyplots in figure 9 are skyplots, which already contain the combined information resulting from the comparison of the signal qualities of the first and second set of GNSS signals, i.e. they are based on the quality number Q. The reason for having the different skyplots in figure 9 is, that for example during the initialization phase the mower moved several times over the same given grid point, wherein each time a respective skyplot was recorded. This corresponds to for example the different time points as shown in the table above, 27.04.2017, 08:43:12 and 27.04.2017, 08:44:46. Another reason may be that during the actual mowing process the mower has also recorded the actually received second set of GNSS signals at the given grid point and is therefore able to generate additional skyplots from these signals.

In figure 9A, four satellite positions are illustrated, wherein one lower right zone of the skyplot contains a representation of satellite position 208 in a shaded manner. In the table above, this corresponds e.g. to the satellite in zone number 7 which due to its low-quality number was excluded from any further accuracy calculations. As a consequence, for all times in future that respective zone number 7 will be ignored irrespective if later on the quality number may improve or not.

It has to be noted that one may define scenarios in which that exclusion of such a zone is reversed. One example may be that during later travels of the mower over the grid point the quality number for that zone fulfills n successive times the first quality criterion. The scenario may then be that in case n>m, m being a predefined number, the exclusion of the zone is reversed. In this case, the original measurement regarding the signal quality of that respective GNSS signal which led to the exclusion of the zone may be disregarded, while optionally any previous signal qualities that where determined for the zone may be considered for a respective recalculation of the accuracy of the location determination for previous points in time.

Figure 9B shows the skyplot 202 of the same grid points at second point in time. Compared to the skyplot of figure 3A, the skyplot is representing a further satellite position that also has quality number that does not fulfill the first quality criterion (shaded position on the top left). Consequently, this zone will also be excluded from any future accuracy determinations.

From figure 9A it becomes clear, that regarding the given point in time three satellites can be used for determining and the accuracy of determination or calculation of the location of the mower at the given grid point. It has to be noted here that it is clear for the skilled person that in practice a position determination using only three satellites is not possible. Discussion is only for illustrative purposes and the skilled person will be able to extend the discussed principles to a number of satellites that is sufficient for performing a precise location determination.

Since in the figure 9B only two satellites are available for the respective determination of an accuracy of location determination, this means that the accuracy for the time point at which the data for figure 3B was acquired is lower than the accuracy for the time point at which the data or figure 3A was acquired. Comparing figures 9A and 9B also illustrates that it is possible that the satellite positions may vary within the zones 206 slightly. The size of the zones may be adapted according to the needs of accuracy and the number of time points for which GNSS signal acquisition is available or desired.

In figure 9C, only the signals from two satellites are available, all having signal qualities that are fulfilling the first quality criterion.

Figure 9D shows a different approach. Here, the skyplot is divided into a blank area 302 and a shaded area 300. The shaded area 300 comprises one satellite position 208 for which the signal quality does not fulfill the first quality criterion. This shaded area 300 is flanked by a set of further satellite positions 208 for which the signal quality does fulfill the first quality criterion. In case a sufficient number of satellites is available which are arranged in a favorable constellation around a satellite position for which signal quality does not fulfill the first quality criterion, boundaries 304 may be calculated that delimit the blank area 302 as an "area of good reception" from the shadowed area 300. Instead of excluding a specific zone from any further accuracy calculations of the vehicle location because its quality number is below the quality criterion, the approach in figure 9D permits the possibility to exclude extended specific areas 300 from such calculations (or vice verca restrict the calculations to the specific area 302).

After having a determined for different time points and grid points the respectively achievable accuracy of the location determination of the mower, it is now the goal to determine for future points in time when to start a mowing process. Since satellite constellations repeat periodically within satellite repeat cycles and since satellite constellations or satellite positions are predictable for future points in time using GNSS Ephemerides or Almanacs, it is possible to perform a predicting process for at least some of the grid points and for forecasting the accuracy of the location determination for points in time in future.

However, this only holds true for grid points for which already GNSS signals where acquired in the past. For grid points that are not yet covered by the mower e.g. during the initialization phase, an interpolation maybe performed. The interpolation is starting from grid points for which the accuracy of a location determination is already available, either from direct measurements or from the above-mentioned predictions.

As a result, for different points in time and grid points a dataset is obtained which comprises a mix of accuracy of location determinations, determined either from the direct measurements, predictions or interpolations.

From such a dataset, a clustering of grid points can be performed. For example, the clustering clusters all grid points together in a suitable manner such that within the next 24 hours, 48 hours or any arbitrary time span the mower is able to process the lawn by means of mowing operation and a respective movement trajectory that covers these clustered grid points. The clustering may select a suitable starting time point for the mowing operation.

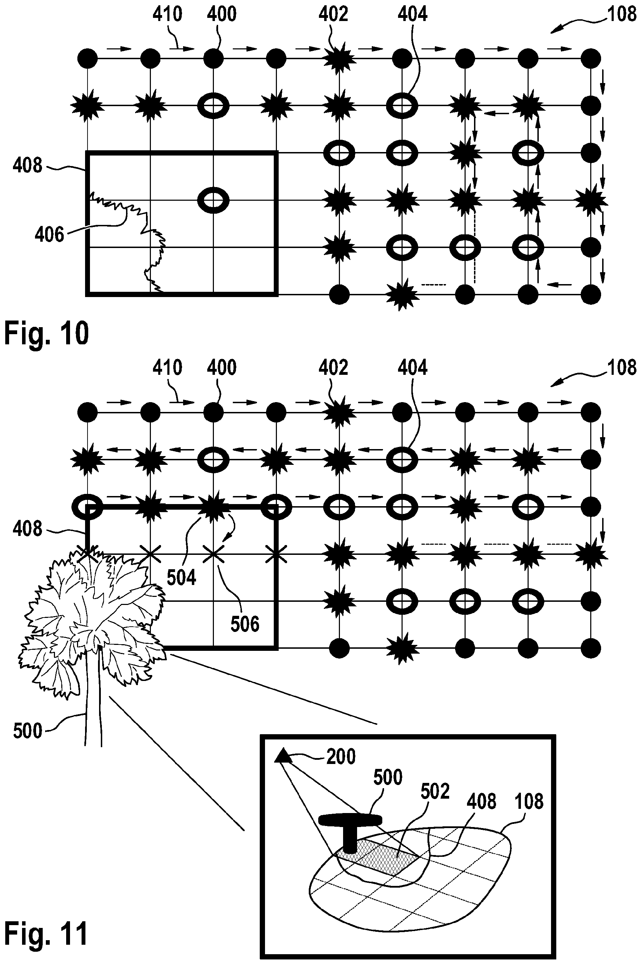

Figure 10 shows a first set of clustered grid points with respect to a given starting time point. The clustering is assumed to include as criterion one of the above described parameters characterizing the soil. Additionally, the clustering is based on the accuracy of the location determination, determined as described above.

Within the grid 108 the individual grid points are either marked with filled circles, empty circles or stars. Some of the grid points miss any markings. This is based on the assumption that when starting the mowing operation at a given time point and moving the mower along the trajectory 410, location determination is possible with sufficient high accuracy (accuracy of the location determination during the guiding fulfilling a second minimum quality criterion). The filled circles 400 represent grid points for which the accuracy of the possible location determination is available from satellite repeat cycle based prediction processes. The empty circles 404 represent grid points for which the accuracy of the possible location determination is available from broadcast Ephemeride calculations. The stars 402 represent grid points for which the accuracy of the possible location determination was determined by means of interpolation.

Further shown in figure 10 is an area of 408 which contains only one marked grid point. The reason is understandable from figure 5 which shows the area 108 is partially shadowed by an obstacle 500, a tree. In figure 4 the presence of the tree is illustrated by the contour line 406. The reason for the shadowing it is understandable from figure 11. Here, a satellite 200 is illustrated, wherein the obstacle 500 shadows the signals sent by the satellite 200 within shadow area of 502 of the work area 108. The finer the discretization of the work area with coordinate grid points, and the more data on achievable location accuracy is available in a clustering, the more precise will be the exact shape of the shadow area of 502. Since in figure 10 the grid is rough and the amount of data on achievable location accuracy within the are 408 is low, the trajectory 410 must completely omit area 408 since accurate GNSS based navigation is not possible within that area for the given time point of starting the mowing operation.

Regarding figure 11 it is assumed, that still within area of 408 a precise location determination of the mower is not possible. However, since for the grid points of the border line of area 408 additional data on achievable location accuracy is available. The respective trajectory 410 may be modified compared to figure 10 to also cover this area 408.

It has to be noted here that it even may be possible that the mower is moving into the area of 408 even though a GNSS based navigation it may not be a reliable enough anymore. For the grid points indicated by crosses in figure 11, a predicting process may be used that additionally takes into account that the position determination is additionally performed using a deduced reckoning position estimate. For example, when the mower is located at grid point 504, odometry may be used to move the mower to grid point 506. Just considering the second minimum quality criterion, in the predicting process the grid point 506 would have been excluded because the accuracy of the location determination does not fulfill a second minimum quality criterion. However, since a lower quality in location determination using GNSS could be improved using odometry, it is additionally considered if the accuracy of the location determination does fulfill the second minimum quality criterion. If this is the case, the associated accuracy of location determination is adjusted taking into account that the position determination is additionally performed using a deduced reckoning position estimate obtained from a deduced reckoning navigation device of the vehicle. This approach is only applied in case the respective grid point is located within a maximum predefined distance from a grid point for which the unadjusted associated accuracy of location determination fulfills the second minimum quality criterion. This minimizes the risk that due to accumulating errors arising from the deduced reckoning navigation the effective accuracy of location determination is decreasing so much that in practice the achieved accuracy is not acceptable any more, e.g. not fulfilling the second minimum quality criterion any more.

It further has to be noted that the above mentioned second minimum quality criterion may be tightened up for certain grid points that are defining the boundaries confining the work area 108. The reason is that under no circumstances the mower is allowed to leave the working area of 108. By tightening up the second minimum quality criterion, the location determination for these grid points at the boundaries can be performed with even higher accuracy thus minimizing the risk that due to navigational errors the mower is unintentionally leaving the area 108.

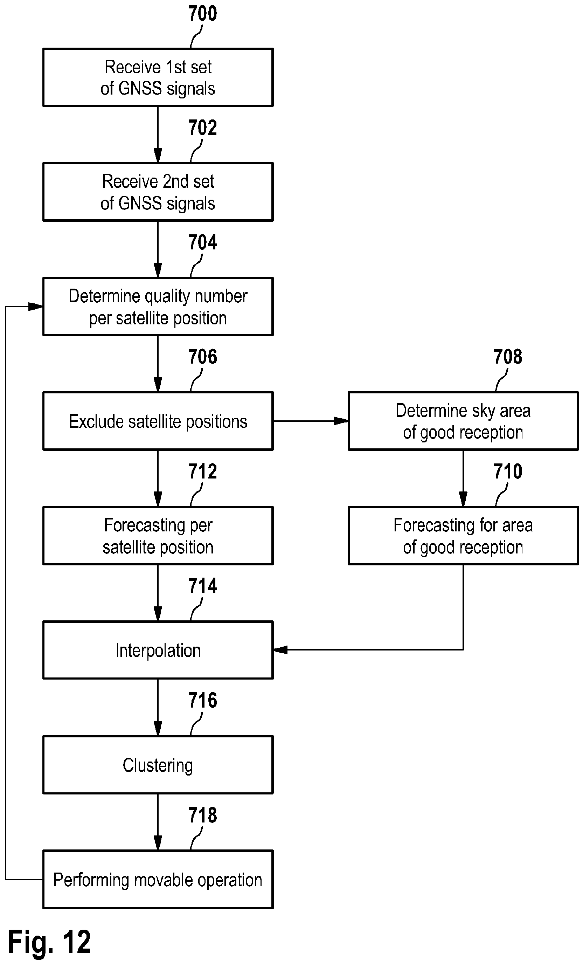

Figure 12 is a flowchart of operating a robotic vehicle for movable operation in a work area. The method starts with step 700 and reception of the first set of GNSS signals from the vehicle base. In parallel in step 702, a second set of GNSS signals is received from the GNSS receiver of the vehicle. Thereupon, in step 704 a comparison is made of the signal qualities of the first and second set of GNSS signals and a quality number per satellite position is derived.

Satellite positions which have a quality number that does not fulfill the predefined quality criterion are then excluded in this step 706. For the remaining satellites and the respective GNSS signals an accuracy of a location determination is then determined and stored together with the point in time of GNSS signal reception and grid point in a dataset.

Step 708 and 710 are optional: in step 708 a sky area of good reception is determined which comprises at least some of the satellite positions for which the quality number of that satellite positions fulfills a respective minimum quality criterion. Thereupon, in step 710 for this area of good reception a forecasting of receiving GNNS signals from satellites located in this area of good reception is being made for forecasting an accuracy of a location determination for points in time future to the respective point in time when the signals were required in step 700 and 702. The forecasting is made for example using Ephemerides, Almanacs and satellite repeat cycles applied on the first or second set of GNSS signals received in steps 700 and 702. For this forecasting, a satellite is allowed to appear anywhere within the whole sky area of good reception. The forecasted accuracy of location determination is then stored together with the future point in time and grid point in the dataset.

In case steps 708 and 710 are not used, the method continues after step 706 with step 712 and the forecasting of an accuracy of a location determination for points in time future to the respective point in time when the signals were required in step 700 and 702. The forecasting is made for example using Ephemerides, Almanacs and satellite repeat cycles applied on the first or second set of GNSS signals received in steps 700 and 702. Compared to the forecasting that was made with respect to steps 708 and 710, this forecasting is based on the discrete satellite positions and sky areas around these satellite positions: in steps 700 and 702 the first and second GNSS signals were received from satellites that were located at certain satellite positions in the sky above the base and the vehicle. In step 712 a forecasting of a reception of first or second GNSS signals for future points in time from satellites located at a sky area around these certain satellite positions is made. From this forecasting, an accuracy of location determination is then determined and stored together with the future point in time and grid point in the dataset.

In optional step 714 an interpolation is being made for at least some of the grid points for which the accuracy of a location determination for certain points in time future to the respective point in time of reception is yet unavailable. I.e. for some points in time in the future, the accuracy of a location determination may already available and for some others not. In the latter case the interpolation may be used to complete the dataset regarding further future time points. The interpolation is considering grid points for which the accuracy of an already available location determination for future points in time is available. The interpolation is resulting in estimated accuracies of location determination for the grid points for which the interpolation was performed.

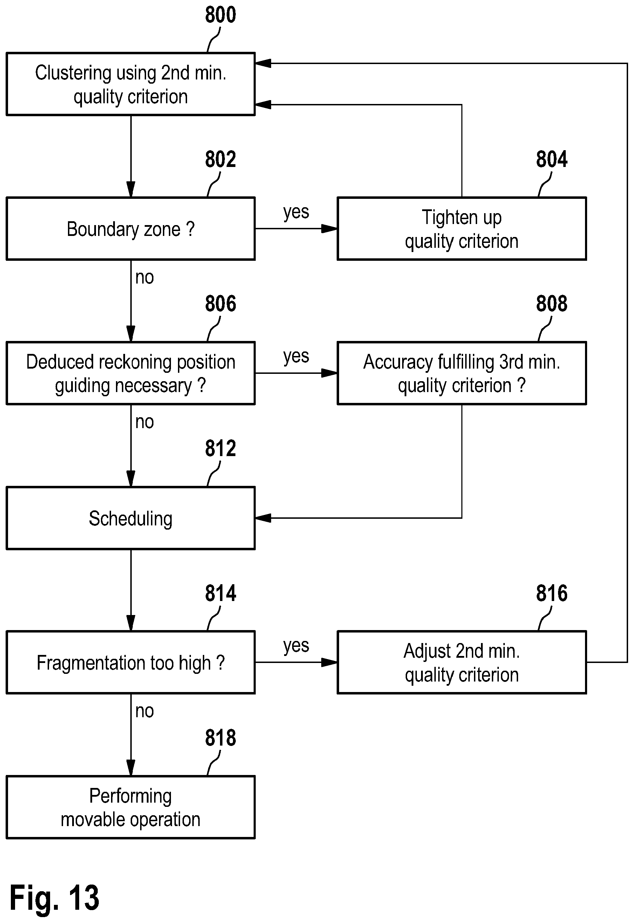

Step 716 comprises a clustering which was already at least partially described in fig. 6 and will be further described in figure 13. In essence, the clustering is resulting in sets of clustered grid points, wherein for each set of the clustered grid points starting from a respective point in time moving of the vehicle along said set of clustered grid points guided using GNSS signals received the planning of the movable operation comprises clustering determination during the guiding fulfilling the second minimum quality criterion. Further, the clustering is based on the parameter characterizing the soil (e.g. growth rate of plants, slip, slope of the area to be processed etc.).

In step 718 the actual movable operation is performed which includes a planning of the operation. The planning comprises a scheduling of the movable operation for obtaining a movement trajectory of the mower for performing the movable operation, the scheduling comprising selecting one or more of the sets of clustered grid points, the movement trajectory comprising the grid points of the sets of clustered grid points.

During the performance of the mowing operation, for each grid point traveled by the vehicle new GNSS signals may be received from the base and the vehicle receiver. All the signals may then be subject to the method steps 704-716, which are repeated accordingly. The more often this process is repeated, the more precise the guidance of the vehicle can be even in the presence of shadows from full satellite reception because the dataset representing the grid points and associated accuracies of the location determination and time points is more and more filled such that even for critical grid points the clustering is able to find an appropriate point in time for which guidance of the vehicle is possible with the required accuracy.

Figure 13 is a flowchart illustrating a method of clustering of grid points. The method starts in step 800 with the clustering according to a second minimum quality criterion: the goal is that sets of clustered grid points are obtained that - starting from a certain future time point - can be traveled by the vehicle and for which (during this travel) a guidance of the vehicle using GNSS signals received during said traveling (movement) is possible with an accuracy of the location determination during the guiding fulfilling a certain (second) minimum quality criterion. In this manner, it is ensured that GNSS based guidance, eventually assisted by deduced reckoning position estimates, is possible at a decent positioning quality. It has to be noted that the clustering according to the parameter characterizing the soil is not discussed here in further detail.

In optional step 802 it is checked if grid points are forming a boundary zone confining the work area. If this is the case, the method continues with step 804 in which the second minimum quality criterion is tightened up and the method jumps back to step 800 which then uses for the grid points of the boundary zone the tightened up (enforced) quality criterion. It has to be noted here, that this procedure may also be reversed in that first all grid points forming the boundaries are identified and then for these identified grid points the quality criterion is tightened up. For the remaining grid points the quality criterion is set to the (non-tightened-up) second minimum quality criterion and thereupon the clustering process is performed. With this approach, a repetition may not be necessary.

In step 806 grid points are identified for which a deduced reckoning position guiding may be necessary. Generally spoken, these may be any grid points which do not yet fulfill the second minimum quality criterion. For the identified grid points, in step 808 it is checked whether the grid points are located within a maximum predefined distance from a grid point for which the unadjusted associated accuracy of location determination fulfills the second minimum quality criterion. In case the check is positive, for a grid point the associated accuracy of location determination is adjusted taking into account that the position determination is additionally performed using a deduced reckoning position estimate obtained from a deduced reckoning navigation device of the vehicle.

The method continues in step 812 which is a scheduling of the movable operation for obtaining a movement trajectory of the vehicle for performing the movable operation, the scheduling comprising selecting one or more of the sets of clustered grid points, the movement trajectory comprising the grid points of the sets of clustered grid points. Each set of clustered grid points comprises respective time points and accuracies.

In step 814 it is additionally checked wherein the movement trajectory obtained for a single contiguous movable operation results in a fragmentation degree of the work area. The fragmentation degree is describing the degree of fragmentation of the work area with respect to subareas of the area covered by the trajectory. In case the fragmentation degree is above a predefined fragmentation threshold, the second minimum quality criterion is relaxed within specified limits in step 816 and the clustering process is repeated starting again from step 800. This repetition is performed with a more and more relaxing the second quality criterion until the degree of fragmentation is below the predefined fragmentation threshold.

Finally, in step 818 the movable operation is performed.

A correspondence with the clustering process of Figure 6 results from the fact that steps 800-808 may be comprised by step 600, step 812 corresponds to step 602, step 814 corresponds to step 604, and step 818 corresponds to step 608.

### List of reference numerals

100 vehicle
102 GNSS receiver
104 base
106 GNSS receiver
108 work area
110 tile
112 grid point
114 first set of GNSS signals
116 second set of GNSS signals
118 controller
120 processor
122 memory
124 instructions
200 satellite
202 skyplot
204 circle
205 line
206 zone
208 representation of a satellite
300 shadow area
302 area of good reception
304 boundary
400 grid point
402 grid point
404 grid point
406 contour line
408 area
410 trajectory
500 tree
502 shadow area
504 grid point
506 grid point
1200 trajectory
1202 trajectory
1204 area limit
1206 area
1208 area
1210 area limit
1212 direction of gradient
1300 clustered grid point
1302 set
1500 wheel
1502 sensor
1504 blade
1506 engine
1508 battery

## Claims

1. A robotic vehicle (100) for movable operation in a work area (108), the movable operation comprising a soil cultivation, the work area (108) being represented by a set of discretized coordinate grid points (112) with each of the grid points (112) representing an area segment of the working area (108), the vehicle (100) comprising a controller (118), the controller (118) comprising a memory (122) and a processor (120), the memory (122) comprising instructions (124), wherein execution of the instructions (124) by the processor (120) causes the vehicle (100) for planning the movable operation, the planning comprising clustering of at least some of the grid points (112), wherein the clustering results in sets (1302) comprising some of the grid points (112), wherein for all grid points (112) in said sets (1302) a value of a parameter characterizing the soil represented by said grid points (112) satisfies a soil criterion for performing the movable operation, wherein execution of the instructions (124) by the processor (120) further causes the vehicle (100) for performing the movable operation based on the sets (1302) of grid points (112), the planning of the movable operation comprising scheduling the movable operation for obtaining a movement trajectory (410; 1200) of the vehicle (100) for performing the movable operation, the scheduling comprising selecting multiple ones of the sets (1302) of clustered grid points (112), the movement trajectory (410; 1200) comprising the grid points (112) of the selected sets (1302) of clustered grid points (112). wherein the movement trajectory (410; 1200) obtained for a single contiguous movable operation results in a fragmentation degree of the work area (108), the fragmentation degree describing the degree of fragmentation of the work area (108) with respect to subareas of the work area (108) given by the selected sets (1302) of clustered grid points covered by the trajectory (410; 1200), the subareas being spatially separated from each other by gaps with the robotic vehicle (100) not being allowed to perform the soil cultivation, when covering the gaps between the subareas, **characterised in that**, in case the fragmentation degree is above a predefined fragmentation threshold, the soil criterion is successively relaxed within specified limits until the degree of fragmentation is below the predefined fragmentation threshold.

2. The robotic vehicle (100) of any of the previous claims, wherein the grid points (112) of the set of grid points (112) are distributed over a portion of the working area, the parameter characterizing the soil comprising a slope of the work area (108), wherein the soil criterion is a minimum average slope of the portion, wherein optionally the minimum average slope is larger than 15%, preferably larger than 20% or 25%.

3. The robotic vehicle (100) of claim 2, the movement trajectory (410; 1200) comprising a zigzag form of the trajectory (410; 1200) with mutually opposite directions of movement, wherein for two parts of the trajectory (410; 1200) running directly adjacent to one another the direction of the movement of the vehicle (100) is respectively opposite with one direction of movement comprising a forward movement and the other direction of the movement comprising a backward movement of the vehicle.

4. The robotic vehicle (100) of claim 1, the parameter characterizing the soil being selected from
- a growth rate of plants to be cultivated and
- a slip of the vehicle's wheels (1500) to be used for the movement of the vehicle (100) on the working area for performing the movable operation,
wherein the soil criterion is a selected range of the value of the parameter characterizing the soil.

5. The robotic vehicle (100) of claim 4, each grid point having associated a respective value of the parameter characterizing the soil, the clustering comprising a cluster analysis of the parameter values characterizing the soil for identifying groups of ranges of parameter values characterizing the soil, the selected range of the parameter values characterizing the soil being selected from the groups of ranges.

6. The robotic vehicle (100) of claim 4 or 5, each grid point having associated a respective value of the parameter characterizing the soil, wherein execution of the instructions (124) by the processor (120) further causes the vehicle (100) for performing a parameter value prediction comprising for a given one of the grid points (112)
- obtaining data valid for said given grid point and being related to the parameter characterizing the soil,
- adapting the parameter value characterizing the soil associated with the given grid point based on the received data.

7. The robotic vehicle (100) of claim 6, the obtained data comprising data on an environmental factor valid for said given grid point and affecting the parameter characterizing the soil, the environmental factor being selected from: sunshine hours, rainfall, soil moisture, fertilization, season, environmental temperature, wind speed, wind direction, air humidity.

8. The robotic vehicle (100) of claim 6 or 7, the obtained data comprising a deviation in the value of the parameter characterizing the soil as determined by the vehicle (100) using a comparison of an expected value of the parameter and an actual value of the parameter as measured by the vehicle, both valid for said given grid point, wherein optionally:
the movable operation is comprising a grass cutting operation and the actual growth height being measured by the vehicle (100) during performing the movable operation and the measurement of the growth height being performed using at least any of an optical sensor and the power consumption of the motor (1508) used to cut the grass.

9. The robotic vehicle (100) of any of the previous claims, the scheduling comprising determining a cultivation point in time for performing the movable operation, the determination of the cultivation point in time being based on
- at least some of the values of the parameter characterizing the soil associated with the grid points (112) of the selected one or more of the sets (1302) of clustered grid points (112) and
- a soil parameter threshold required for performing the movable operation, wherein the soil parameter threshold is a threshold of the values of the parameter characterizing the soil.

10. The robotic vehicle (100) of any of the previous claims, the values of the parameter characterizing the soil comprising values of the slip of the vehicle's wheels (1500) associated with the grid points (112) of the selected one or more of the sets (1302) of clustered grid points (112), wherein in case the specific slip value does not satisfy the soil parameter threshold, the cultivation point in time is delayed compared to the case when the specific slip value does satisfy the soil parameter threshold.

11. The robotic vehicle (100) of any of the previous claims, wherein execution of the instructions (124) by the processor (120) causes the vehicle (100) for each grid point of a subset of the grid points (112) at different first points in time performing an initialization process, the initialization process comprising determining by the vehicle (100) the value of the parameter characterizing the soil represented by said grid point.

12. The robotic vehicle (100) of claim 11, the vehicle (100) comprising a Global Navigation Satellite System, GNSS, receiver (106), the initialization process further comprising:
- receiving at one of the first points in time a first set of GNSS signals (114) from a vehicle base (104),
- receiving at said first point in time a second set of GNSS signals (116) from the GNSS receiver (106),
- determining an accuracy of a location determination, the location determination being based on the second set of GNSS signals (116), the determination of the accuracy being based on a comparison of the signal qualities of the first set of GNSS signals (114) and the second set of GNSS signals (116),
wherein optionally execution of the instructions (124) by the processor (120) further causes the vehicle (100) for performing the planning the movable operation based on at least some of the grid points (112) for which an accuracy of the location determination is available and the accuracy of the location determination.

13. A method for operating a robotic vehicle (100) for movable operation in a work area (108), the movable operation comprising a soil cultivation, the work area (108) being represented by a set of discretized coordinate grid points (112) with each of the grid points (112) representing an area segment of the working area (108), the method comprising planning the movable operation, the planning comprising clustering of at least some of the grid points (112), wherein the clustering results in sets (1302) comprising some of the grid points (112), wherein for all grid points (112) in said sets (1302) a value of a parameter characterizing the soil represented by said grid points (112) satisfies a soil criterion for performing the movable operation, wherein the movable operation is performed based on the sets (1302) of grid points (112), the planning of the movable operation comprising scheduling the movable operation for obtaining a movement trajectory (410; 1200) of the vehicle (100) for performing the movable operation, the scheduling comprising selecting multiple ones of the sets (1302) of clustered grid points (112), the movement trajectory (410; 1200) comprising the grid points (112) of the selected sets (1302) of clustered grid points (112),
wherein the movement trajectory (410; 1200) obtained for a single contiguous movable operation results in a fragmentation degree of the work area (108), the fragmentation degree describing the degree of fragmentation of the work area (108) with respect to subareas of the work area (108) given by the selected sets (1302) of clustered grid points covered by the trajectory (410; 1200), the subareas being spatially separated from each other by gaps with the robotic vehicle (100) not being allowed to perform the soil cultivation, when covering the gaps between the subareas, **characterised in that**, in case the fragmentation degree is above a predefined fragmentation threshold, the soil criterion is successively relaxed within specified limits until the degree of fragmentation is below the predefined fragmentation threshold.

14. A computer program product comprising computer executable instructions (124) to perform the method of claim 13.

## Patentansprüche

1. Robotisches Fahrzeug (100) für beweglichen Betrieb in einem Arbeitsbereich (108), der bewegliche Betrieb eine Bodenbearbeitung umfassend, wobei der Arbeitsbereich (108) durch einen Satz diskretisierter Koordinaten-Rasterpunkte (112) repräsentiert ist, wobei jeder der Rasterpunkte (112) ein Bereichssegment des Arbeitsbereichs (108) repräsentiert, das Fahrzeug (100) ein Steuergerät (118) umfassend, das Steuergerät (118) einen Speicher (122) und einen Prozessor (120) umfassend, der Speicher (122) Anweisungen (124) umfassend, wobei die Ausführung der Anweisungen (124) durch den Prozessor (120) das Fahrzeug (100) dazu veranlasst, den beweglichen Betrieb zu planen, die Planung ein Clustern von mindestens einigen der Rasterpunkte (112) umfassend, wobei das Clustern in Sätzen (1302) resultiert, die einige der Rasterpunkte (112) einschließen, wobei für alle Rasterpunkte (112) in besagten Sätzen (1302) ein Wert eines Parameters, der den durch besagte Rasterpunkte (112) repräsentierten Boden charakterisiert, ein Bodenkriterium zur Durchführung des beweglichen Betriebs erfüllt, wobei die Ausführung der Anweisungen (124) durch den Prozessor (120) das Fahrzeug (100) ferner veranlasst, den beweglichen Betrieb auf Grundlage der Sätze (1302) von Rasterpunkten (112) durchzuführen, die Planung des beweglichen Betriebs eine Ablaufplanung des beweglichen Betriebs umfassend, um eine Bewegungsbahn (410; 1200) des Fahrzeugs (100) zur Durchführung des beweglichen Betriebs zu erhalten, die Ablaufplanung das Auswählen mehrerer der Sätze (1302) geclusterter Rasterpunkte (112) umfassend, die Bewegungsbahn (410; 1200) die Rasterpunkte (112) der ausgewählten Sätze (1302) geclusterter Rasterpunkte (112) umfassend, wobei die für einen einzelnen zusammenhängenden beweglichen Betrieb erhaltene Bewegungsbahn (410; 1200) in einem Fragmentierungsgrad des Arbeitsbereichs (108) resultiert, der Fragmentierungsgrad den Grad der Fragmentierung des Arbeitsbereichs (108) in Bezug auf Teilbereiche des Arbeitsbereichs (108), die durch die ausgewählten Sätze (1302) geclusterter Rasterpunkte gegeben sind, die von der Bewegungsbahn (410; 1200) abgedeckt sind, beschreibend, wobei die Teilbereiche räumlich voneinander durch Lücken separiert sind, wobei es dem robotischen Fahrzeug (100) nicht erlaubt ist, die Bodenbearbeitung durchzuführen, wenn die Lücken zwischen den Teilbereichen abgedeckt sind, **dadurch gekennzeichnet, dass** im Fall, dass der Fragmentierungsgrad oberhalb einer vorab definierten Fragmentierungsschwelle liegt, das Bodenkriterium schrittweise innerhalb spezifizierter Grenzen gelockert wird, bis der Fragmentierungsgrad unterhalb der vorab definierten Fragmentierungsschwelle liegt.

2. Robotisches Fahrzeug (100) nach einem der vorstehenden Ansprüche, wobei die Rasterpunkte (112) des Satzes von Rasterpunkten (112) über einen Abschnitt des Arbeitsbereichs verteilt sind, der den Boden charakterisierende Parameter ein Gefälle des Arbeitsbereichs (108) umfassend, wobei das Bodenkriterium ein Mindestdurchschnittsgefälle des Abschnitts ist, wobei optional das Mindestdurchschnittsgefälle größer als 15 %, vorzugsweise größer als 20 % oder 25 % ist.

3. Robotisches Fahrzeug (100) nach Anspruch 2, die Bewegungsbahn (410; 1200) eine Zickzackform der Bahn (410; 1200) mit entgegengesetzten Bewegungsrichtungen umfassend, wobei bei zwei Teilen der Bahn (410; 1200), die direkt angrenzend zueinander verlaufen, die Bewegungsrichtung des Fahrzeugs (100) jeweils entgegengesetzt ist, mit einer Bewegungsrichtung, die eine Vorwärtsbewegung umfasst, bzw. der anderen Bewegungsrichtung, die eine Rückwärtsbewegung des Fahrzeugs umfasst.

4. Robotisches Fahrzeug (100) nach Anspruch 1, wobei der den Boden charakterisierende Parameter ausgewählt wird aus
- einer Wachstumsrate von Pflanzen, die angebaut werden sollen, und
- einem Schlupf der Räder (1500) des Fahrzeugs, die zur Bewegung des Fahrzeugs (100) im Arbeitsbereich zur Durchführung des beweglichen Betriebs eingesetzt werden,
wobei das Bodenkriterium ein ausgewählter Bereich des Wertes des den Boden charakterisierenden Parameters ist.

5. Robotisches Fahrzeug (100) nach Anspruch 4, wobei jedem Rasterpunkt ein jeweiliger Wert des den Boden charakterisierenden Parameters zugeordnet ist, wobei das Clustern eine Clusteranalyse der den Boden charakterisierenden Parameterwerte umfasst, um Bereichsgruppen von den Boden charakterisierenden Parameterwerten zu identifizieren, wobei der ausgewählte Bereich der den Boden charakterisierenden Parameterwerte aus den Bereichsgruppen ausgewählt wird.

6. Robotisches Fahrzeug (100) nach Anspruch 4 oder 5, wobei jedem Rasterpunkt ein jeweiliger Wert des den Boden charakterisierenden Parameters zugeordnet ist, wobei die Ausführung der Anweisungen (124) durch den Prozessor (120) das Fahrzeug (100) ferner dazu veranlasst, eine Parameterwert-Vorhersage durchzuführen, für einen gegebenen der Rasterpunkte (112) umfassend:
- Erhalt von Daten, die für besagten gegebenen Rasterpunkt gültig sind und mit dem den Boden charakterisierenden Parameter im Zusammenhang stehen,
- Anpassung des den Boden charakterisierenden Parameterwertes, der mit dem gegebenen Rasterpunkt verknüpft ist, auf Grundlage der erhaltenen Daten.

7. Robotisches Fahrzeug (100) nach Anspruch 6, wobei die erhaltenen Daten Daten zu einem Umgebungsfaktor umfassen, der für besagten gegebenen Rasterpunkt gültig ist und den den Boden charakterisierenden Parameter betrifft, wobei der Umgebungsfaktor ausgewählt wird aus: Sonnenstunden, Niederschlag, Bodenfeuchte, Düngung, Jahreszeit, Umgebungstemperatur, Windgeschwindigkeit, Windrichtung, Luftfeuchte.

8. Robotisches Fahrzeug (100) nach Anspruch 6 oder 7, wobei die erhaltenen Daten eine Abweichung im Wert des den Boden charakterisierenden Parameters umfassen, festgestellt durch das Fahrzeug (100) mittels eines Abgleichs eines erwarteten Wertes des Parameters und eines Ist-Wertes des Parameters, wie ihn das Fahrzeug misst, die beide für besagten gegebenen Rasterpunkt gültig sind, wobei optional:
der bewegliche Betrieb einen Grasschnittbetrieb umfasst und die Ist-Wuchshöhe vom Fahrzeug (100) im Zuge der Durchführung des beweglichen Betriebs gemessen wird und die Messung der Wuchshöhe unter Verwendung von mindestens einem beliebigen eines optischen Sensors und der Leistungsaufnahme des zum Grasschneiden eingesetzten Motors (1508) erfolgt.

9. Robotisches Fahrzeug (100) nach einem der vorstehenden Ansprüche, wobei die Ablaufplanung umfasst, einen Bearbeitungszeitpunkt zur Durchführung des beweglichen Betriebs zu bestimmen, die Bestimmung des Bearbeitungszeitpunktes basierend auf
- mindestens einigen der Werte des den Boden charakterisierenden Parameters, der mit den Rasterpunkten (112) des ausgewählten einen oder mehreren der Sätze (1302) geclusterter Rasterpunkte (112) verknüpft ist, und
- einer Bodenparameter-Schwelle, die zur Durchführung des beweglichen Betriebs erforderlich ist, wobei die Bodenparameter-Schwelle eine Schwelle der Werte des den Boden charakterisierenden Parameters ist.

10. Robotisches Fahrzeug (100) nach einem der vorstehenden Ansprüche, die Werte des den Boden charakterisierenden Parameters Werte des Schlupfes der Fahrzeugräder (1500) umfassend, die mit den Rasterpunkten (112) des ausgewählten einen oder mehreren der Sätze (1302) geclusterter Rasterpunkte (112) verknüpft sind, wobei im Fall, dass der spezifische Schlupfwert nicht die Bodenparameter-Schwelle erreicht, der Bearbeitungszeitpunkt im Vergleich zum Fall, dass der spezifische Schlupfwert die Bodenparameter-Schwelle erreicht, verzögert wird.

11. Robotisches Fahrzeug (100) nach einem der vorstehenden Ansprüche, wobei die Ausführung der Anweisungen (124) durch den Prozessor (120) das Fahrzeug (100) für jeden Rasterpunkt eines Teilsatzes der Rasterpunkte (112) zu unterschiedlichen ersten Zeitpunkten dazu veranlasst, einen Initialisierungsprozess durchzuführen, wobei der Initialisierungsprozess umfasst, dass vom Fahrzeug (100) der Wert des den Boden charakterisierenden Parameters, der durch besagten Rasterpunkt repräsentiert ist, bestimmt wird.

12. Robotisches Fahrzeug (100) nach Anspruch 11, das Fahrzeug (100) einen Receiver (106) eines Globalen Navigationssatellitensystems, GNSS, umfassend, der Initialisierungsprozess ferner umfassend:
- Empfang, zu einem der ersten Zeitpunkte, eines ersten Satzes von GNSS-Signalen (114) aus einer Fahrzeugbasis (104),
- Empfang, zu besagtem ersten Zeitpunkt, eines zweiten Satzes von GNSS-Signalen (116) vom GNSS-Receiver (106),
- Bestimmung einer Genauigkeit einer Standortbestimmung, die Standortbestimmung auf dem zweiten Satz von GNSS-Signalen (116) basierend, die Bestimmung der Genauigkeit auf einem Abgleich der Signalqualitäten des ersten Satzes von GNSS-Signalen (114) und des zweiten Satzes von GNSS-Signalen (116) basierend,
wobei optional die Ausführung der Anweisungen (124) durch den Prozessor (120) das Fahrzeug (100) ferner dazu veranlasst, die Planung des beweglichen Betriebs auf Grundlage von mindestens einigen der Rasterpunkte (112), für die eine Genauigkeit der Standortbestimmung zur Verfügung steht, und der Genauigkeit der Standortbestimmung durchzuführen.

13. Verfahren zum Betreiben eines robotischen Fahrzeugs (100) für beweglichen Betrieb in einem Arbeitsbereich (108), der bewegliche Betrieb eine Bodenbearbeitung umfassend, wobei der Arbeitsbereich (108) durch einen Satz diskretisierter Koordinaten-Rasterpunkte (112) repräsentiert ist, wobei jeder der Rasterpunkte (112) ein Bereichssegment des Arbeitsbereichs (108) repräsentiert, das Verfahren eine Planung des beweglichen Betriebs umfassend, die Planung ein Clustern von mindestens einigen der Rasterpunkte (112) umfassend, wobei das Clustern in Sätzen (1302) resultiert, die einige der Rasterpunkte (112) einschließen, wobei für alle Rasterpunkte (112) in besagten Sätzen (1302) ein Wert eines Parameters, der den durch besagte Rasterpunkte (112) repräsentierten Boden charakterisiert, ein Bodenkriterium zur Durchführung des beweglichen Betriebs erfüllt, wobei der beweglichen Betrieb auf Grundlage der Sätze (1302) von Rasterpunkten (112) durchgeführt wird, die Planung des beweglichen Betriebs eine Ablaufplanung des beweglichen Betriebs umfassend, um eine Bewegungsbahn (410; 1200) des Fahrzeugs (100) zur Durchführung des beweglichen Betriebs zu erhalten, die Ablaufplanung das Auswählen mehrerer der Sätze (1302) geclusterter Rasterpunkte (112) umfassend, die Bewegungsbahn (410; 1200) die Rasterpunkte (112) der ausgewählten Sätze (1302) geclusterter Rasterpunkte (112) umfassend, wobei die für einen einzelnen zusammenhängenden beweglichen Betrieb erhaltene Bewegungsbahn (410; 1200) in einem Fragmentierungsgrad des Arbeitsbereichs (108) resultiert, der Fragmentierungsgrad den Grad der Fragmentierung des Arbeitsbereichs (108) in Bezug auf Teilbereiche des Arbeitsbereichs (108), die durch die ausgewählten Sätze (1302) geclusterter Rasterpunkte gegeben sind, die von der Bewegungsbahn (410; 1200) abgedeckt sind, beschreibend, wobei die Teilbereiche räumlich voneinander durch Lücken separiert sind, wobei es dem robotischen Fahrzeug (100) nicht erlaubt ist, die Bodenbearbeitung durchzuführen, wenn die Lücken zwischen den Teilbereichen abgedeckt sind, **dadurch gekennzeichnet, dass** im Fall, dass der Fragmentierungsgrad oberhalb einer vorab definierten Fragmentierungsschwelle liegt, das Bodenkriterium schrittweise innerhalb spezifizierter Grenzen gelockert wird, bis der Fragmentierungsgrad unterhalb der vorab definierten Fragmentierungsschwelle liegt.

14. Computerprogrammprodukt, vom Computer ausführbare Anweisungen (124) umfassend, um das Verfahren nach Anspruch 13 durchzuführen.

## Revendications

1. Véhicule robotisé (100) destiné à une opération mobile dans une zone de travail (108), l'opération mobile comprenant une culture du sol, la zone de travail (108) étant représentée par un ensemble de points de grille (112) de coordonnées discrètes avec chacun des points de grille (112) représentant un segment de zone de la zone de travail (108), le véhicule (100) comprenant un dispositif de commande (118), le dispositif de commande (118) comprenant une mémoire (122) et un processeur (120), la mémoire (122) comprenant des instructions (124), dans lequel l'exécution des instructions (124) par le processeur (120) fait en sorte que le véhicule (100) planifie l'opération mobile, la planification comprenant un regroupement d'au moins quelques uns des points de grille (112), dans lequel le regroupement a pour résultats des ensembles (1302) comprenant quelques uns des points de grille (112), dans lequel, pour tous les points de grille 112) dans lesdits ensembles (1302), une valeur d'un paramètre caractérisant le sol représenté par lesdits points de grille (112) satisfait à un critère de sol pour effectuer l'opération mobile, dans lequel l'exécution des instructions (124) par le processeur (120) fait en outre en sorte que le véhicule (100) effectue l'opération mobile sur la base des ensembles (1302) de points de grille (112), la planification de l'opération mobile comprenant la planification de l'opération mobile pour obtenir une trajectoire de mouvement (410 ; 1200) du véhicule (100) pour effectuer l'opération mobile, la planification comprenant la sélection de plusieurs parmi les ensembles (1302) de points de grille (112) regroupés, la trajectoire du mouvement (410 ; 1200) comprenant les points de grille (112) des ensembles (1302) sélectionnés de points de grille (112) regroupés,
dans lequel la trajectoire du mouvement (410 ; 1200) obtenue pour un seule opération mobile contigüe a pour résultat un degré de fragmentation de la zone de travail (108), le degré de fragmentation décrivant le degré de fragmentation de la zone de travail (108) par rapport à des zones secondaires de la zone de travail (108) donnée par les ensembles (1302) sélectionnés de points de grille regroupés couverts par la trajectoire (410 ; 1200), les zones secondaires étant séparées spatialement les unes des autres par des intervalles avec le véhicule robotisé (100) n'étant pas autorisé pour effectuer la culture du sol, lorsqu'il recouvre les intervalles entre les zones secondaires, **caractérisé en ce que**
dans le cas où le degré de fragmentation est supérieur à un seuil de fragmentation prédéfini, le critère de sol est successivement reporté dans des limites spécifiées jusqu'à ce que le degré de fragmentation soit inférieur au seuil de fragmentation prédéfini.

2. Véhicule robotisé (100) selon l'une quelconque des revendications précédentes, dans lequel les points de grille (112) de l'ensemble de points de grille (112) sont distribués sur une partie de la zone de travail, le paramètre caractérisant le sol comprenant une pente de la zone de travail (108), dans lequel le critère de sol est une pente moyenne minimale de la partie, dans lequel, éventuellement, la pente moyenne minimale est supérieure à 15 %, de préférence, supérieure à 20 % ou 25 %.

3. Véhicule robotisé (100) selon la revendication 2, la trajectoire du mouvement (410 ; 1200) comprenant une forme en zigzag de la trajectoire (410 ; 1200) avec des directions mutuellement opposées de mouvement, dans lequel, pour deux parties de la trajectoire (410 ; 1200) s'étendant directement de manière adjacente l'une à l'autre, la direction du mouvement du véhicule (100) est respectivement opposée à une direction de mouvement comprenant un mouvement vers l'avant et l'autre direction de mouvement comprenant un mouvement vers l'arrière du véhicule.

4. Véhicule robotisé (100) selon la revendication 1, le paramètre caractérisant le sol étant choisi parmi
- une vitesse de croissance de plantes devant être cultivées et
- un dérapage des roues (1500) du véhicule devant être utilisé pour le mouvement du véhicule (100) sur la zone de travail pour effectuer l'opération mobile,
dans lequel le critère de sol est une plage choisie de la valeur du paramètre caractérisant le sol.

5. Véhicule robotisé (100) selon la revendication 4, chaque point de grille possédant une valeur respective associée du paramètre caractérisant le sol, le regroupement comprenant une analyse de groupes des valeurs de paramètres caractérisant le sol pour identifier des groupes de plages de valeurs de paramètres caractérisant le sol, la plage sélectionnée des valeurs de paramètre caractérisant le sol étant sélectionnée à partir des groupes de plages.

6. Véhicule robotisé (100) selon la revendication 4 ou la revendication 5, chaque point de grille ayant associé une valeur respective du paramètre caractérisant le sol, dans lequel l'exécution des instructions (124) par le processeur (120) fait en outre que le véhicule (100) effectue une prédiction de la valeur du paramètre comprenant un point donné des points de grille (112)
- l'obtention de données valides pour ledit point de grille donné et étant reliées au paramètre caractérisant le sol,
- l'adaptation de la valeur de paramètre caractérisant le sol associée avec le point de grille donné sur la base de la donnée reçue.

7. Véhicule robotisé (100) selon la revendication 6, les données obtenues comprenant des données concernant un facteur environnemental valide pour ledit point de grille donné et influençant le paramètre caractérisant le sol, le facteur environnemental étant choisi parmi : les heures d'ensoleillement, la pluviométrie, l'humidité du sol, la fertilisation, la saison, la température environnementale, la vitesse du vent, la direction du vent, l'humidité de l'air.

8. Véhicule robotisé (100) selon la revendication 6 ou la revendication 7, les données obtenues comprenant une déviation de la valeur du paramètre caractérisant le sol telle que déterminée par le véhicule (100) en utilisant une comparaison d'une valeur attendue du paramètre et d'une valeur réelle du paramètre telle que mesurée par le véhicule, toutes deux valides pour ledit point de grille donné, dans lequel, éventuellement :
l'opération mobile est composée d'une opération de coupe de l'herbe et la hauteur de croissance réelle étant mesurée par le véhicule (100) pendant l'exécution de l'opération mobile et la mesure de la hauteur de croissance étant effectuée en utilisant au moins un paramètre quelconque parmi un capteur optique ou la consommation d'énergie du moteur (1508) utilisé pour couper l'herbe.

9. Véhicule robotisé (100) selon l'une quelconque des revendications précédentes, la planification comprenant la détermination d'un point de culture dans le temps pour effectuer l'opération mobile, la détermination du point de culture dans le temps étant basée sur
- au moins quelques unes des valeurs du paramètre caractérisant le sol associées avec les points de grille (112) de l'ensemble ou des ensembles sélectionnés parmi les ensembles (1302) de points de grille (112) regroupés et
- un seuil du paramètre de sol nécessaire pour effectuer l'opération mobile, dans lequel le seuil de paramètre de sol est un seuil des valeurs du paramètre caractérisant le sol.

10. Véhicule robotisé (100) selon l'une quelconque des revendications précédentes, les valeurs du paramètre caractérisant le sol comprenant des valeurs du dérapage des roues (1500) du véhicule associées avec les points de grille (112) de l'ensemble ou des ensembles sélectionnés parmi les ensembles (1302) de points de grille (112) regroupés, dans lequel, dans le cas où la valeur de dérapage spécifique ne satisfait pas le seuil du paramètre de sol, le point de culture dans le temps est différé par comparaison au cas où la valeur de dérapage spécifique ne satisfait pas au seuil du paramètre de sol.

11. Véhicule robotisé (100) selon l'une quelconque des revendications précédentes, dans lequel l'exécution des instructions (124) par le processeur (120) fait en sorte que le véhicule (100), pour chaque point de grille d'un sous-ensemble de points de grille (112) à différents premiers points dans le temps, effectue un processus d'initialisation, le processus d'initialisation comprenant la détermination, par le véhicule (100), de la valeur du paramètre caractérisant le sol représenté par ledit point de grille.

12. Véhicule robotisé (100) selon la revendication 11, le véhicule (100) comprenant un récepteur (106) de système global de navigation par satellite, GNSS, le processus d'initialisation comprenant en outre :
- la réception à un point parmi les premiers points dans le temps d'un premier ensemble de signaux GNSS (114) à partir d'une base de véhicule (104),
- la réception audit premier point dans le temps d'un deuxième ensemble de signaux GNSS (116) à partir du récepteur GNSS (106),
- la détermination d'une précision d'une détermination d'une localisation, la détermination de la localisation étant basée sur le deuxième ensemble de signaux GNSS (116), la détermination de la précision étant basée sur une comparaison des qualités de signaux du premier ensemble de signaux GNSS (114) et du deuxième ensemble de signaux GNSS (116),
dans lequel, éventuellement, l'exécution des instructions (124) par le processeur (120) fait en outre de sorte que le véhicule (100) effectue la planification de l'opération mobile sur la base d'au moins quelques uns des points de grille (112) pour lesquels une précision de la détermination de la localisation est disponible et de la précision de la détermination de la localisation.

13. Procédé de mise en oeuvre d'un véhicule robotisé (100) pour une opération mobile dans une zone de travail (108), l'opération mobile comprenant une culture du sol, la zone de travail (108) étant représentée par un ensemble de points de grille (112) de coordonnées discrètes avec chacun des points de grille (112) représentant un segment de zone de travail (108), le procédé comprenant la planification de l'opération mobile, la planification comprenant un regroupement d'au moins quelques uns des points de grille (112), dans lequel le regroupement a pour résultats des ensembles (1302) comprenant quelques uns des points de grille (112), dans lequel, pour tous les points de grille 112) dans lesdits ensembles (1302), une valeur d'un paramètre caractérisant le sol représenté par lesdits points de grille (112) satisfait à un critère de sol pour effectuer l'opération mobile, dans lequel l'opération mobile est effectuée sur la base des ensembles (1302) de points de grille (112), la planification de l'opération mobile comprenant la planification de l'opération mobile pour obtenir une trajectoire de mouvement (410 ; 1200) du véhicule (100) pour effectuer l'opération mobile, la planification comprenant la sélection de plusieurs des ensembles (1302) de points de grille (112) regroupés, la trajectoire du mouvement (410 ; 1200) comprenant les points de grille (112) des ensembles (1302) sélectionnés de points de grille (112) regroupés, dans lequel la trajectoire du mouvement (410 ; 1200) obtenue pour un seule opération mobile contigüe a pour résultat un degré de fragmentation de la zone de travail (108), le degré de fragmentation décrivant le degré de fragmentation de la zone de travail (108) par rapport à des zones secondaires de la zone de travail (108) donné par les ensembles (1302) sélectionnés de points de grille regroupés couverts par la trajectoire (410 ; 1200), les zones secondaires étant séparées spatialement les unes des autres par des intervalles avec le véhicule robotisé (100) n'étant pas autorisé pour effectuer la culture du sol lorsqu'il recouvre les intervalles entre les zones secondaires, **caractérisé en ce que**
dans le cas où le degré de fragmentation est supérieur à un seuil de fragmentation prédéfini, le critère de sol est successivement différé dans des limites spécifiées jusqu'à ce que le degré de fragmentation soit inférieur au seuil de fragmentation prédéfini.

14. Produit-programme informatique comprenant des instructions (124) exécutables par ordinateur pour exécuter le procédé selon la revendication 13.
